(19) Europäisches Patentamt

European Patent Office

Office européen des brevets

(11) **EP 0 870 996 A2**

(12) **EUROPÄISCHE PATENTANMELDUNG**

(43) Veröffentlichungstag:
14.10.1998 Patentblatt 1998/42

(51) Int. Cl.6: **F24H 8/00**, F28D 20/00

(21) Anmeldenummer: 98106317.5

(22) Anmeldetag: 07.04.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 10.04.1997 DE 19714760
28.11.1997 DE 19752709

(71) Anmelder: Luther, Gerhard, Dr.
66119 Saarbrücken (DE)

(72) Erfinder: Luther, Gerhard, Dr.
66119 Saarbrücken (DE)

(54) **Abgaswandler**

(57)      Verfahren und Vorrichtungen zur Abgaswandlung bei Feuerungsanlagen, insbesondere Kleinfeuerungsanlagen

Die Verringerung der Abgasverluste ist bei herkömmlichen Feuerungsanlagen durch die Unterschreitung des Taupunktes des Abgases begrenzt (Kaminversottung). Herkömmliche Brennwertgeräte sind bei den üblichen Rücklauttemperaturen nur mäßig effizient und erfordern einen Ersatz der gesamten Feuerungsanlage.

Der Abgaswandler (AGW) wandelt heißes und feuchtes Kesselabgas unter Wärmerückgewinnung in lauwarmes und trockenes Kaminabgas um, das im Kamin nicht mehr auskondensieren kann. Hierzu wird das Kesselabgas nach der Ausschöpfung des Wärmeübertrages auf den Heizungsrücklauf zusätzlich mit Umgebungsluft weiter abgekühlt und getrocknet und anschließend mit aufgewärmter Kühlluft als Fremdluft zum Kaminabgas vermischt, welches die Druckbedingung der DIN 4705 erfüllt. Der AGW macht Gebrauch von dem hohen Wärmeübergang bei mäßigem Druckabfall von laminarer Strömung in engen Zwischenrippenkanälen.

Der AGW kann integriert in der Feuerstätte oder als Zusatzgerät für alle Öl- und Gaskessel sowie für dezentrale Kraft- Wärme gekoppelte Anlagen eingesetzt werden.

Bild 1:

Printed by Xerox (UK) Business Services
2.16.3/3.4

**Beschreibung**

## 0. Problemstellung und Stand der Technik

**Zielvorgabe**

Die Verbrennung fossiler Brennstoffe zu Heizzwecken ist ohne die vollständige Ausnutzung der im Brennstoff enthaltenen Energie (Brennwert) eigentlich nicht mehr zu vertreten. Das im folgenden beschriebene Verfahren der Abgaswandlung (AGW) setzt sich zum Ziel, den auf den Brennwert bezogenen **Netto-Abgasverlust** (/1/), - also den fühlbaren und latenten Wärmeinhalt des Abgases beim Verlassen des zu beheizenden Bereiches des Hauses -, durch eine geeignete Gestaltung und Prozessführung der Feuerungsanlage zu **minimieren** und möglichst weitgehend aus thermodynamisch **niedrigwertiger** Wärme zu speisen.

**Zielerfüllung**

Die übrigbleibenden unvermeidlichen Netto-Abgasverluste ergeben sich **bei einem herkömmlichen Kamin** daraus, daß die Ableitbedingungen für den Kamin ( Druck- und Temperaturbedingung nach DIN 4705, /2/) erfüllt werden müssen:
Die Einhaltung der Temperaturbedingung garantiert, daß die Oberflächentemperatur im Innern des Schornsteins noch am kältesten Punkt in der Regel oberhalb des Wasserdampf-Taupunktes des Abgases liegt. In der Praxis wird in vielen Fällen die Temperaturbedingung verletzt: Niederschlag von Feuchtigkeit und Kaminversottung sind die Folge. Durch die Abgaswandlung wird hingegen ein trockenes Kaminabgas erzeugt, das die Temperaturbedingung der DIN 4705 inhärent erfüllt.
Die übrigbleibende Druckbedingung der DIN 4705 garantiert den für die Ableitung der Abgase notwendigen Unterdruck. Sie stellt Anforderungen an den Auftrieb der gesamten Abgassäule und wirkt sich daher nur indirekt auf die Temperatur des das Haus verlassenden Abgases aus; diese ist jedoch alleine maßgebend für den Netto-Abgasverlust. Die Nettoabgasverluste lassen sich daher durch die Abgaswandlung sehr weit herunterdrücken; zudem bestehen sie zu einem großen Teil aus "niedrigwertiger" Wärme, die erst bei niedriger Temperatur aus dem Kesselabgas ausgekoppelt wurde und daher nicht für einen alternativen Einsatz in einem Warmwasserheizsystem eingesetzt werden kann. - Bei Einsatz eines Dachventilators wird die Druckbedingung mechanisch erzwungen; die Erzeugung des hierfür eingesetzten elektrischen Stromes erfordert normalerweise viel weniger Primärenergie als die thermische Bereitstellung des Unterdruckes im Kamin.
Auch **bei einem druckfesten Kamin** erübrigt sich die Einhaltung der Druckbedingung der DIN 4705. Der Abgastransport darf dann alleine durch einen im Kesselbereich installierten Abgasventilator bewirkt werden. Der Nettoabgasverlust ist dann nach unten nur noch begrenzt durch die Nutzungstemperatur des beheizten Hauses, also die Raumtemperatur, unter die man die Abgastemperatur in der Praxis nicht drücken wird.
Da der Abgaswandler (AGW) ein trockenes Abgas erzeugt, werden keine Anforderungen an die Feuchteresistenz des Kamines gestellt. Herkömmliche Kamine können also unverändert bleiben.

**Zum Stand der Technik**

Viele bestehende Feuerungsanlagen haben Schwierigkeiten, die zwar unsinnigen aber durch die Kleinfeuerungsanlagenverordnung (1. BlmSchV, /3/) in Deutschland gesetzlich festgeschriebenen Anforderungen an den Brutto-Abgasverlust /1/ zu erfüllen. Mit "Brutto-Abgasverlust" bezeichne ich den (fühlbaren) Wärmeinhalt des Abgases am Ausgang des Kessels, der in der physikalisch nicht korrekten Sprechweise der 1.BlmSchV bereits als relevanter "Abgasverlust" der Feuerungsanlage behandelt wird. (Erst mit der jüngsten Novelle 1996 der 1.BlmschV wurde aufgrund meiner Kritik /1/ die Bezeichnung "Abgasverlust der Feuerungsanlage" für den Bruttoabgasverlust in "Abgasverlust der Feuerstätte" korrigiert). In /4/ werden konventionelle Methoden zur Bewältigung diese Problemes (Nebenluftvorrichtungen, "Kaminsanierung" etc.) aufgeführt und kritisiert.
Die Heizungstechnik hat in den letzten Jahren durch den Einsatz von Nieder- und Tieftemperaturkesseln sowie vor allem durch den Uebergang zur Brennwerttechnik eine deutliche Verbesserung der Energieausbeute erreicht. Das AGW- Verfahren stellt eine Erweiterung des handelsüblichen Verfahrens zur Nutzung des Brennwertes dar. Alle bestehenden Kessel können durch einen nachgeschalteten Abgaswandler (AGW), der gegebenenfalls nur eine Auswahl der im Kapitel 1 aufgeführten Elemente umfaßt, ergänzt und dadurch verbessert werden. Bei Neuanlagen kann der AGW auch direkt in den Kessel integriert werden. Der technische Fortschritt besteht darin, daß

- die niedrigste ausnutzbare Kondensationstemperatur nicht auf die Temperatur des Heizungsrücklaufwassers beschränkt ist

- keine zusätzlichen Anforderungen an herkömmliche Kamine zu stellen sind

- eine bestehende Feuerungsanlage ergänzt werden kann und dadurch auch eine kostengünstige Nachrüstung auf Brennwertnutzung möglich wird.

Auch bei fortschrittlichen lokalen Heiztechniken wie motorgetriebener Gaswärmepumpe, Heizung unter Kraft-Wärmekopplung mit Motoren ("Kraftheizung") oder stationären Brennstoffzellen im Strom- und Wärmebetrieb kann der Abgaswandler eingesetzt werden, um das wasserdampfhaltige Abgas von seiner Feuchtigkeit zu befreien und die Kondensationsenergie für eine niedertemperaturige Heizungsanwendung nutzbar zu erschließen.

Das AGW-Verfahren wurde erstmalig in /4/ vorgestellt. Die dort angegebene technische Realisierung benötigte jedoch noch zuviel Platz. In dieser Schritt wird die Darstellung weiter systematisiert und eine kompakte Realisierung angegeben.

## 1. Das AGW-Verfahren

Im Abgaswandler (**AGW**)- Verfahren wird das ursprüngliche Verbrennungsabgas ("**Kessel**-Abgas") nach der möglichst weitgehenden Abgabe seines Wärmeinhaltes an das Heizungswasser durch Wärmetausch mit Umgebungsluft oder Frischluft noch weiter heruntergekühlt und anschließend mit vorgewärmter Fremdluft zum "**Kamin**abgas" vermischt. Das Kaminabgas wird hierbei so eingestellt, daß sein Wasserdampftaupunkt unterhalb der Raumtemperatur oder doch so niedrig liegt, daß eine Wasserkondensation im Innern des Kamines ausgeschlossen werden kann. Bei einem nicht druckfesten Kamin kann die Druckbedingung der DIN 4705 dadurch erfüllt werden, daß als Fremdluft ein Teil der Luft benutzt wird, die zur Abkühlung des Kesselabgases aufgewärmt wurde; gegebenenfalls kann eine weitere Erwärmung des Kaminabgases durch Wärmetausch mit wärmeren Teilen des Kesselabgases erfolgen.

Kurt gesagt: der Abgaswandler macht aus heißem und feuchtem Kesselabgas unter Wärmerückgewinn **lauwarmes und trockenes Kaminabgas**.

Bild 1 zeigt ein vereinfachtes Blockschaltbild einer Feuerungsanlage mit Abgaswandler. Das ursprüngliche **Kesselabgas** 1 wird zunächst im Heißgaskühler 10 (**HGK**) ohne Unterschreitung des Taupunktes vorabgekühlt und im WasserKondensationsKühler 20 (**WKK**) wird auch die Kondensationswärme so weit wie möglich auf den Heizungsrücklauf übertragen. Im anschließenden LuftKondensationskühler 30 (**LKK**) erfolgt durch Wärmübertragung auf Umgebungsluft (4 und 5) eine noch weitergehendere Abkühlung und Entfeuchtung. Der Taupunkt des ausgekühlten Kesselabgases wird durch die Zumischung von Fremdluft 5 weiter verringert und kann bei entsprechender Auslegung der Wärmeübertrager (Wüt) ohne Schwierigkeiten unter die Raumtemperatur des Gebäudes gelegt werden. Das so mit Fremdluft vermischte Kesselabgas wird als **Kaminabgas** 8 bezeichnet. Als Fremdluft wird der am meisten aufgeheizte Teil der im LKK 30 zur Kühlung des ankommenden Kesselabgases eingesetzten Luft benutzt. Auch das Kesselabgas wird nach seiner maximalen Entfeuchtung im Gegenstrom durch den LKK wieder mit Niedertemperaturwärme, die zum Wärmeübertrag auf den Heizungsrücklauf zu kalt ist, rückgewärmt. Gegebenfalls wird das Kaminabgas 8 im Heißgaskühler 10 noch weiter aufgewärmt und auf die für die Einhaltung der Druckbedingung des Kamines notwendige Temperatur gebracht.

Die Vermischung von Kesselabgas 1 und Fremdluft 5 zum Kaminabgas 8 kann, wie in Bild 1 der Einfachheit halber dargestellt, noch im LKK nach der maximalen Entfeuchtung des Kesselabgases erfolgen. Aus technischen Gründen wird man jedoch bestrebt sein, den Druckabfall im Abgaskreis so gering wie möglich zu halten. Deshalb ist es zweckmäßig die Druckkraft des "Luftventilators", der die Luft durch den LKK treibt, auch noch möglichst weitgehend für den Transport der Fremdluft zu nutzen und die Fremdluft 5 erst nach dem Wärmeübertrag im HGK 30 mit dem Kesselabgas 1 zu vermischen (Bild 2). Während es bei der Umluft 4 nur auf die möglichst weitgehende Auskühlung des Kesselabgases ankommt, sollte die genau dosierte Fremdluft 5 auch eine möglichst hohe Temperaturerhöhung im LKK erhalten. Daher wird man die Fremdluft 5 getrennt von der Umluft 4 auf einem längeren Weg durch den wärmsten Teil des LKK 30 führen. Das getrennt geführte Kesselabgas 1 sollte man zwar wg. der möglichst weitgehenden Ausnutzung der Niedertemperaturwärme im Gegenstrom durch den LKK führen; der Uebertrag von hochwertiger Wärme im HGK 10 kann hingegen normalerweise auf die Fremdluft 5 beschränkt werden (wie in Bild 2 dargestellt). Lediglich bei sehr geringer Fremdluftzufuhr muß gegebenfalls auf eine direkte Rückwärmung des Kesselabgases im HGK zurückgegriffen werden.

## Energiewertigkeit

Eine Bewertung der im LKK auf die Umluft übertragenen Wärme wurde bereits im Abschnitt 2.2.3.2 von /4/ vorgenommen. Sie kann zum Teil der Vorerwärmung der Verbrennungsluft und der Fremdluft von der Außentemperatur auf die Kellertemperatur zugerechnet werden. Der darüberhinausgehende Teil dient der zusätzlichen Erwärmung des Kellers und kommt damit auch teilweise dem an den Keller thermisch ankoppelnden Erdgeschoß zugute /10/. Die auf die Umluft übertragene Wärme kann natürlich auch bei der Belüftung von Nutzräumen eingesetzt werden; wegen der relativ niedrigen Temperatur sollte jedoch auf kurze Wege geachtet werden

Der Bruttoabgasverlust des Kaminabgases besteht aus einem Sockel an Niedertemperatur (NT)- Wärme, der im LKK bei einer Temperatur, die unterhalb der Rücklauftemperatur des Warmwasser-Heizkreises liegt, aufgenommen wurde, und einem im HGK aufgenommenen "Hochtemperatur" (HT) Anteil, der dem Heizkreis vorenthalten wurde. Dieser hochwertige Anteil und darüberhinaus noch ein je nach den örtlichen Kaminverhälnissen unterschiedlicher Anteil vom oberen Temperaturbereich der NT- Wärme wird in der Regel beim Abgastransport als Kaminwärme an das zu beheizende Haus übertragen (/1/). Der Nettoabgasverlust besteht daher bei richtiger Auslegung der Anlage ausschließlich aus niedertemperaturiger "Sockelwärme", die letztlich vollständig aus dem LKK stammt und damit für den Transport über den Warmwasser-Heizkreis nicht eingesetzt werden könnte. - Es sei der Hinweis erlaubt, daß bei einer herkömmlichen Feuerungsanlage der fühlbare Nettoabgasverlust praktisch vollständig aus hochwertiger Wärme herstammt.

Bei Fixierung auf den Nettoabgasverlust, was vernünftig ist, legt man die Anlage so aus, daß möglichst wenig Fremdluft beigemischt wird und nimmt dafür einen höheren Anteil von hochtemperaturiger Wärme aus dem HGK am Bruttoabgasverlust in Kauf. Einen unerwünschten Uebertrag von hochtemperaturiger Wärme an den Keller kann man praktisch vermeiden, wenn das warme Kaminabgas wie mit einem "Ofenrohr" über ein gut isoliertes Zwischenstück erst an der Oberkante des Kellerraumes in den Kamin eingeführt wird. Bei Fixierung auf den Bruttoabgasverlust, was zwar unvernünftig ist aber durch die 1. BlmSchV nahegelegt wird, versucht man den Anteil an HGK-Wärme zu minimieren und heizt dafür eine größere Menge Fremdluft im LKK auf; allerdings muß man hierbei den wegen der größeren Kamingasmenge höheren Widerstandsdruck im Auge behalten.

**Einordnung des herkömmlichen Brennwertkessels**

Wendet man die Dastellungsweise des Bildes 1 oder 2 auf einen herkömmlichen Brennwertkessel an, so müßte man das Kesselabgas 1 nach Durchlauf durch den WKK 20 direkt mit dem Kamin 9 verbinden (Bild 3). Der Förderdruck wird meist durch einen Abgasventilator erzeugt, der Kamin muß druckfest und feuchteresistent sein, also bei Altbauten in der Regel "saniert" werden. Außerdem wird meistens auf eine definierte konstruktive Trennung zwischen HGK 10 und WKK 20 verzichtet, was die durchgängige Verwendung von Edelstahl als gleichermaßen temperatur- wie korrosionsfesten Werkstoff notwendig macht.

**Materialauswahl**

Die **konstruktive Trennung** zwischen HGK und WKK ist zwar für die Funktionsweise des AGW nicht erforderlich, ergibt aber vor allem technische und preisliche Vorteile bei der Wahl der Materialien. Der Heißgaskühler (**HGK**) erfordert temperaturfeste Materialien, die aber nicht besonders korrosionsfest sein müssen, weil konstruktiv verhindert wird, daß der Taupunkt im HGK unterschritten wird. Kupfer für den Wärmetauscher und normales Eisenblech für die sonstige Konstruktion können benutzt werden. Der WasserKondensationskühler (**WKK**) erfordert korrosionsfeste Werkstoffe, ihre Temperaturfestigkeit kann jedoch eingeschränkt sein, da durch den vorgeschalteten HGK die auftretenden Temperaturen in allen Betriebszuständen begrenzt sind. Als Wärmetauscherfläche kann außer Edelstahl vermutlich auch durch einen Kunststoffüberzug geschütztes Kupferblech, wie im Abschnitt 2.24 noch ausgeführt wird, eingesetzt werden. Als sonstiges Konstruktionsmaterial kann Kunsstoff, z.B. Polypropylen (PP), verwendet werden. Will man auch den Wärmetauscher des WKK aus Kunsstoff bauen, so muß auf die Druckfestigkeit und Sauerstoffdichtigkeit der vom Heizungswasser direkt durchflossenen Teile geachtet werden (/4/). Diese Einschränkungen gelten jedoch nicht mehr für den LuftKondensationskühler (**LKK**), bei dem es sich im einfachen Fall (siehe Abschnitt 2.31) um einen niedertemperaturigen Gas-Gas-Wüt (Wüt = Wärmeübertrager) handelt; daher können hier Standardkunsstoffe eingesetzt werden, die die erforderliche Korrosionsfestigkeit ohne Schwierigkeiten erbringen.

**Anwendungsbereich**

Das Verfahren der Abgaswandlung kann auf alle modernen Feuerungsanlagen angewendet werden. Altanlagen können ohne Austausch oder Modifizierung bestehender Anlagenteile ergänzt werden, bei Neuanlagen kann die Abgaswandlung von vorneherein im Kessel integriert werden. Eine ausfühliche Diskussion der verschieden Anwendungen des AGW-Verfahrens wird im Kapitel 3 vorgenommen; -bei der Entwicklung der Konzeption hat jedoch zunächst der Fall eines Erdgaskessels mit Gebläse Pate gestanden.

**2. Realisierung der Elemente des AGW-Verfahrens**

Für alle Elemente des AGW können im Prinzip herkömmliche am Markt verfügbare Wüt eingesetzt werden. Die besonderen Randbedingungen reizen jedoch zu einer auf die besonderen Anforderungen und Möglichkeiten abgestimmten Neukonstruktion.

### 2.1 Vorbemerkung: Konstruktion mit „Rohren" (siehe /4/)

In /4/ wurde eine Konstruktion des Abgaswandlers angegeben, die sich insbesondere auf die Benutzung von Rohren stützte. Ofenrohre im Bereich HGK, Abwasserrohre aus PP und PVC für die Mantelflächen von WKK und LKK, sowie PE-X Rohre (Heizungsrohre für Fußbodenheizungen) für den Wärmetauscher im WKK und PVC-Rohre (z.B. Isolierrohre aus der Elektotechnik) für den Luft-Luft-Wüt (LKK). Diese auch auf die Realisierung durch einen geschickten Heimwerker ausgerichtete Konstruktion mit Massenware aus dem nächsten Baumarkt erfüllt jedoch nur schwerlich die Anforderungen der Massenproduktion, des Marketings und der Benutzerfreundlichkeit für den verwöhnten Konsumenten. Daher wird im folgenden eine kompakte Konstruktion für alle Elemente des AGW vorgestellt, die sich sowohl zur Nachrüstung in bestehende Feuerungsanlagen als auch zur Integration in einen neuartigen "Brennwertkessel mit Abgaswandlung" eignet.

### 2.2 Konstruktion mit Rippen- Wüt

Beim Wärmeübergang von Gas auf Wasser wird der wesentlich geringeren Wärmeübergangszahl auf der Gasseite der Trennwand dadurch Rechnung getragen, daß man hier die Oberfläche durch Verwendung von Rippen um ein Vielfaches steigert (e.g. /5/). Der menschliche Erfindungsgeist hat sich dieser Frage in hunderten (keine Uebertreibung!) von Patentschriften angenommen. Die Besonderheit der im folgenden beschriebenen Rippen- Wüt liegt vor allem in der Ausnutzung des guten Wärmeüberganges bei geringem Druckabfall durch eine langsame **laminare Srömung in engen Kanälen**.

### 2.21 Prinzip des laminaren Rippen- Wüt

Normalerweise vermeidet der Konstrukteur von Wüt den laminaren Bereich eines fließenden Wärmeträgers, da sich bei einer turbulenteren Strömung mit dem Druckanstieg auch die Wärmeübertragung vergrößert. In einer laminaren Strömung ist hingegen bei den üblichen Abständen zwischen den Rippen die Wärmeübergangszahl alpha unwirtschaftlich niedrig.

Bei der Strömung durch Rohre oder Kanäle lassen sich jedoch auch im laminaren Bereich hohe Wärmeübergangszahlen erzwingen, wenn man den hydraulischen Durchmesser genügend klein wählt. Bei der Strömung zwischen den Rippen kann man sich das so vorstellen, daß bei kleiner werdendem Abstand der Begrenzungsflächen die beiderseitigen Grenzschichten ineinander übergehen und dadurch der Temperaturgradient zwischen dem Medium und der Wand einfach aus geometrischen Gründen ansteigt. Bei einer laminaren Strömung in einem ebenen Spalt der Weite s mit Wärmeübertrag an beiden Seiten gilt nach /6/ für die minimale Nusseltzahl $Nu_0$:

$$Nu_0 = 7,54 \ (Gl. \ (19) \ von \ /6/ \ ), \tag{1}$$

wobei die dimensionlose Nusseltzahl allgemein definiert ist durch

$$Nu = alpha \ ^*d_h \ /lambda \tag{2}$$

mit dem hydraulischen Durchmesser

$$d_h = 2 \ ^* \ s \tag{3}$$

und lambda als der Wärmeleitung des Fluids. Löst man die Gln.(1) - (3) nach dem Wärmübergangskoeffizienten alpha auf, setzt für lambda den in /2/ mitgeteilten Stoffwert für Abgas ein und ermittelt s in [mm], so erhält man die Faustformel:

$$alpha = 100/ \ s \ [W/m^2/K] \ , \ wobei \ s \ in \ [mm]. \tag{4}$$

Für den Druckabfall $\Delta p$ in einem rechteckigen Kanal, - mit der Kanalweite s (entsprechend der Spaltweite), der Breitseite a und der Länge B -, gilt bei laminarer Strömung das Hagen-Poiseuillesche Gesetz in der Form (nach den Gln.(3) und (14) von /7/ ):

$$\Delta p = phi \ ^* \ 32 \ ^* \ (\nu \ ^* \ \rho) \ ^* \ B \ ^* \ w \ / \ d_h{}^2 \ , \tag{5}$$

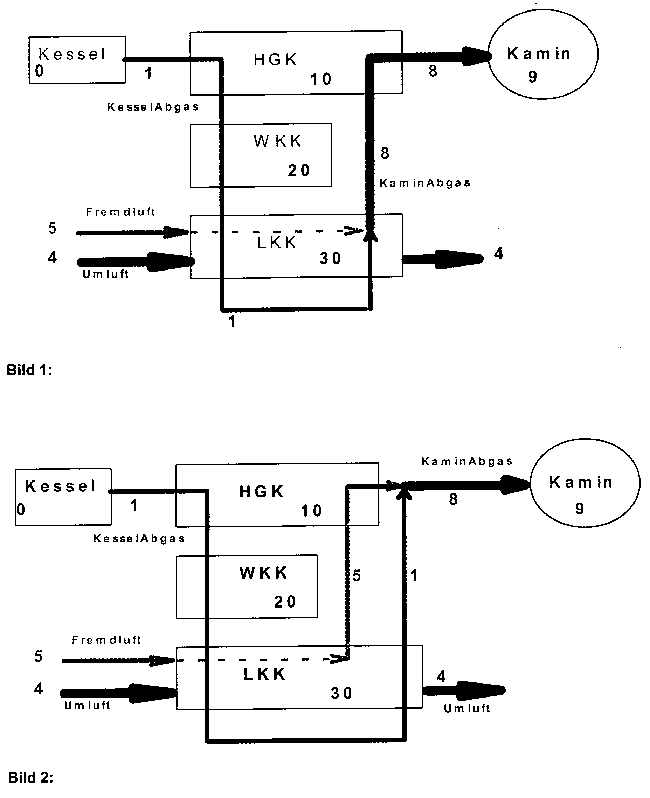

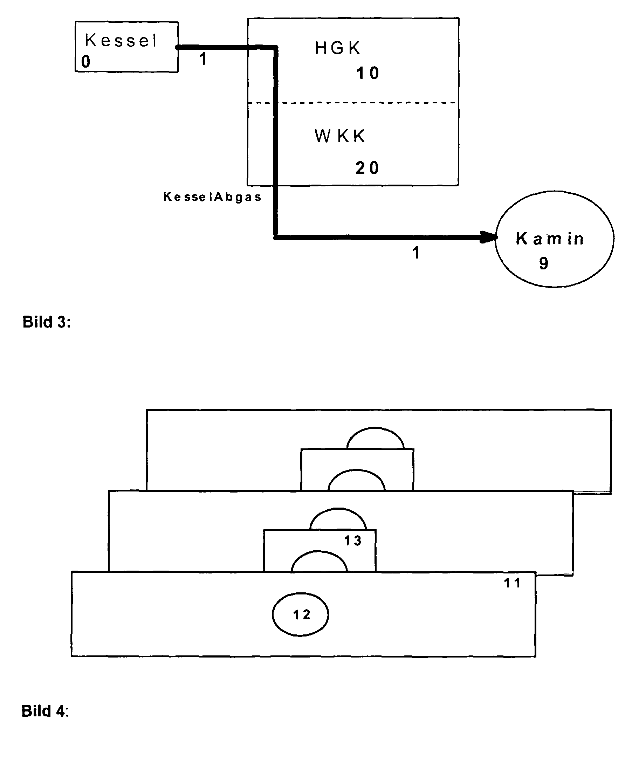

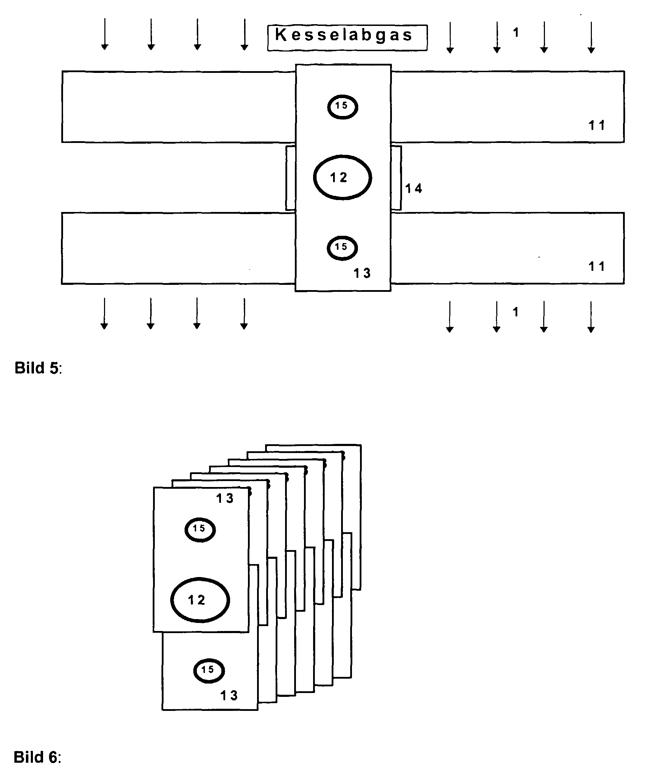

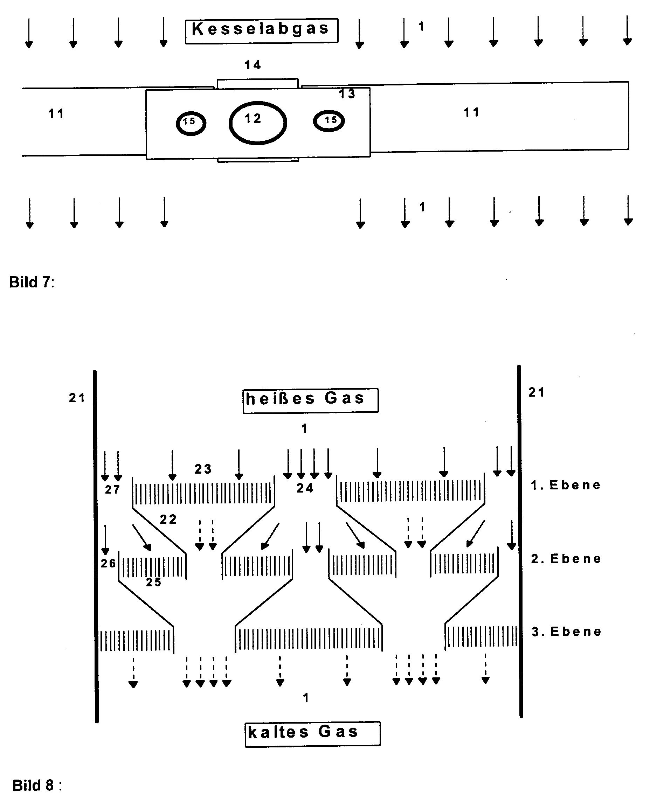

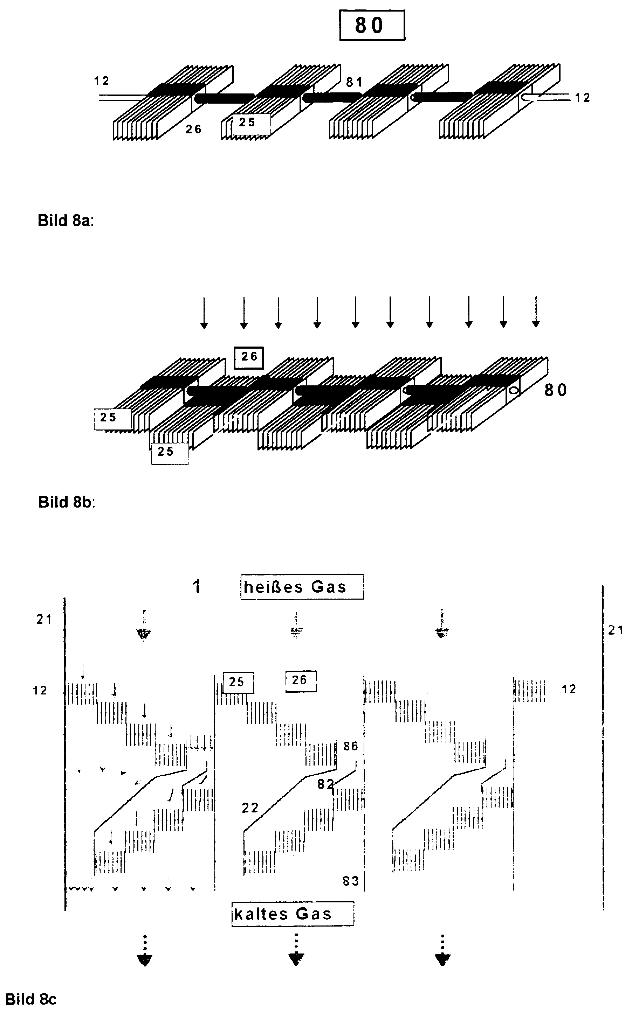

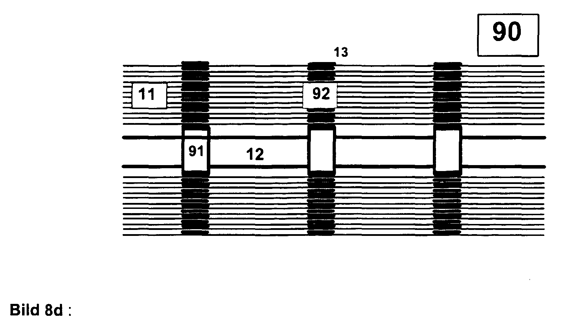

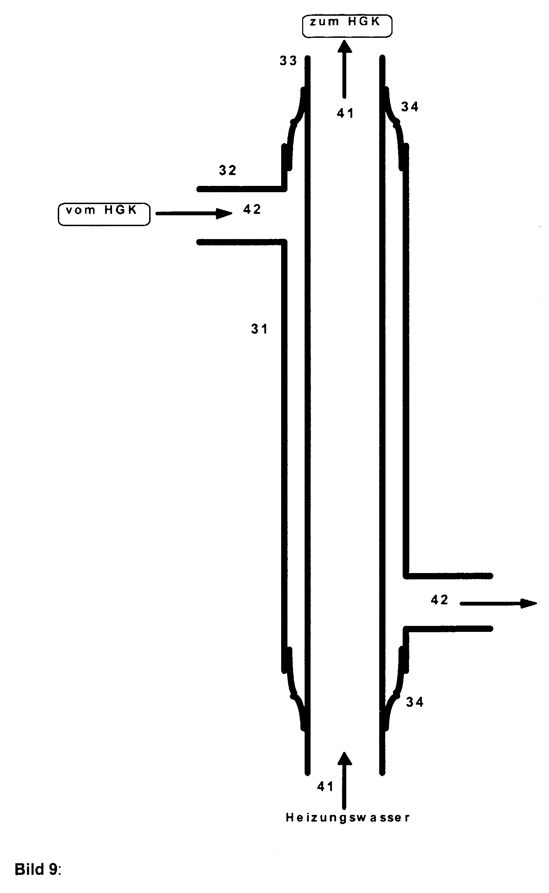

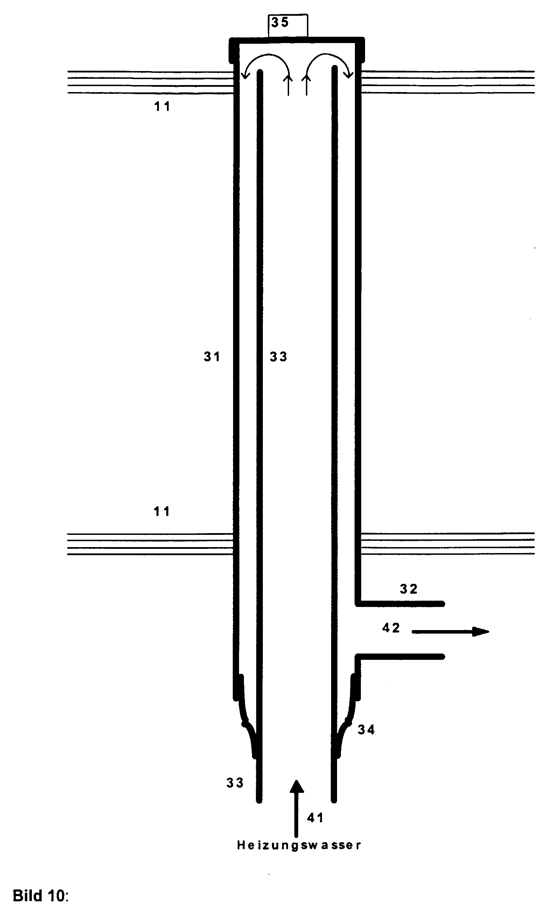

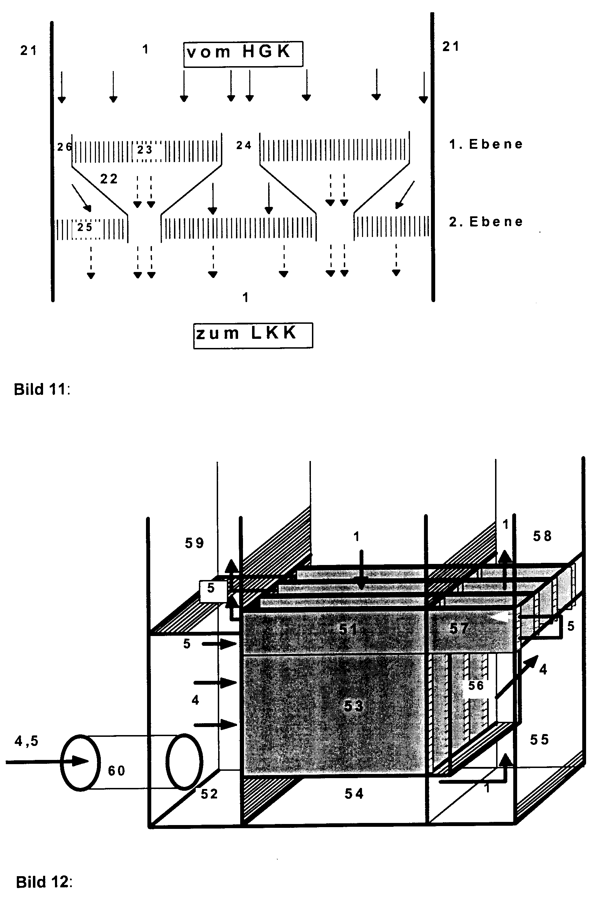

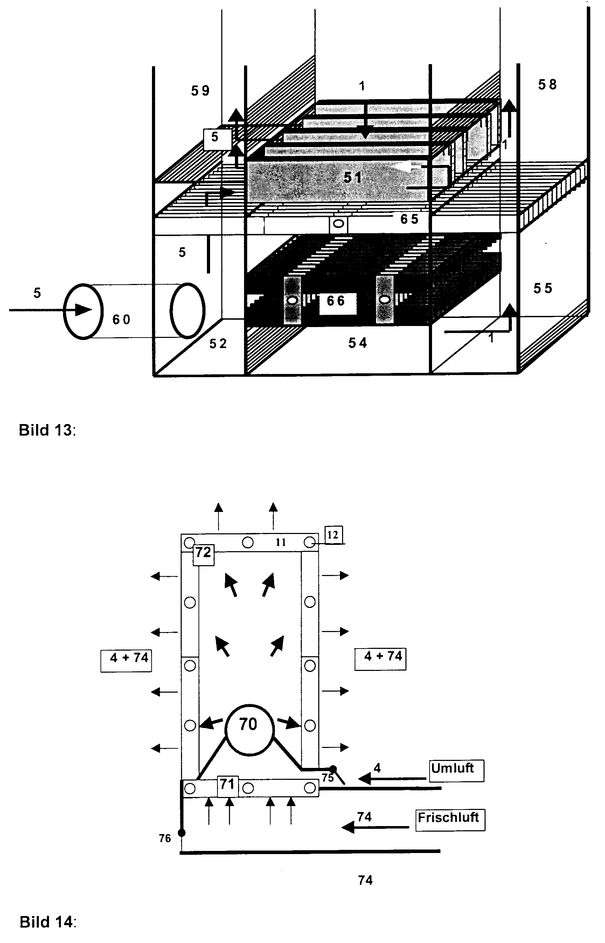

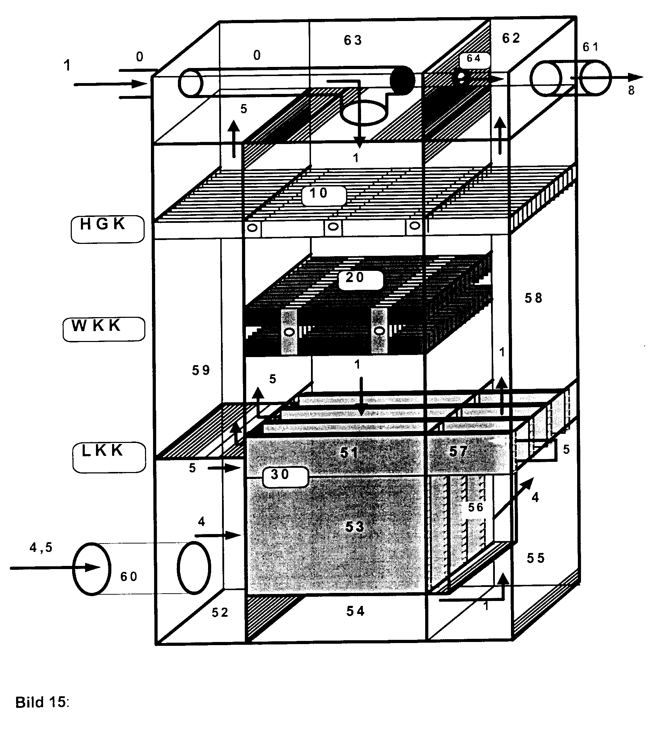

wobei $\nu$ die kinematische Zähigkeit, $\rho$ die Dichte und w die Geschwindigkeit des Fluids bezeichnen. Der Beiwert phi wird in der Abbildung 18 von /7/ dargestellt und ergibt den Zahlenwert 1,5 für den uns interessierenden Grenzfall, daß s/a sehr klein ist. Der hydraulische Durchmesser $d_h$ entspricht Gl. (3). Dann ergibt sich

$$\Delta p = 12^* (\nu \; ^* \; \rho) \; ^* \; B \; ^* \; w \; / \; s^2 \; , \tag{6}$$

Setzt man für die Stoffgrößen die Werte für Abgas (bei ca. 100 °C) aus /2/ ein und ermittelt s und B in [mm], so erhält man als Faustformel:

$$\Delta p = 0{,}24^* \; B \; ^* \; w \; / \; s^2 \; [Pa], \; \text{wobei s und B in [mm] und w in [m/s]}. \tag{7}$$

Hinzu kommt noch der Einzelwiderstands- Druckverlust $\Delta p_Z$ , der sich ergibt aus dem Uebergang der Strömung vom Abgaskanal in den Rippen-Wüt und umgekehrt, und für den ein quadratischer Ansatz mit einem experimentell zu bestimmenden „Zeta Wert" $\xi$ gilt:

$$\Delta p_Z = \xi \; ^* \; ( \; 1/2^* \rho \; ^* w^2 \; ) \; [Pa] \tag{7a}$$

Wichtig ist, daß der Wärmeübergang alpha sich bei kleiner werdender Geschwindigkeit w des Gases nicht mehr wesentlich verringert, der Druckverlust $\Delta p$ im Kanal jedoch nach Gl. (7) weiter mit w und der Einfügungswiderstand $\Delta p_Z$ sogar mit $w^2$ abnimmt. Das quadratische Anwachsen von $\Delta p$ mit $1/s^2$ sorgt andererseits dafür, daß die "Bäume nicht in den Himmel wachsen". Man erkennt aus Gl. (4), daß man bereits bei einem Rippenabstand von s=1 [mm] zu einem bemerkenswerten Wärmeübergang alpha= 100 [W/m^2/K] gelangt und dies nach Gl. (7), - etwa bei einer noch durchaus "brauchbaren" Geschwindigkeit von w= 1 [m/s] und einer Anströmstrecke von B = 20 [mm] -, nur mit einem erstaunlich niedrigem Druckabfall im Kanal, hier von ca. 5 [Pa], erkaufen muß. Im turbulenten Bereich lassen sich bei vergleichbarer Aufgabenstellung so hohe Werte von alpha nur bei wesentlich höherem Druckaufwand $\Delta p$ erzeugen.

Der Wärmekapazitätsstrom des Kühlmittels, also beispielsweise des Rücklaufs der Heizung, ist wesentlich größer als der des ankommenden Kesselabgases; daher ist die Ausnutzung etwa des Gegenstromprinzips nur von geringfügiger Bedeutung. In diesen Fällen kann eine vorgegebene Uebertragungsfläche dann am betriebsgünstigsten ausgenutzt werden, wenn der Wärmeübertrag im laminaren Bereich und bei möglichst langsamer Gasgeschwindigkeit, also auf einer kurzen Strecke mit großem Anströmquerschnitt, stattfindet. Im Abschnitt 2.22 wird daher eine Methode zur einfachen Herstellung von Rippen- Wüt mit kleinem Abstand zwischen den Rippen und im Abschnitt 2.23 eine Methode zur Vergrößerung des parallelen Strömungsquerschnitts eines Rippen- Wüt angegeben.

## 2.22 Rippenrohr mit kleinem Abstand zwischen den Rippen

Normalerweise werden Rippen als L-Profil spiralartig auf das Kühlrohr geschweißt oder gelötet. Durch den Rippenfuß mit Naht und die benutzte Technik ist es nicht möglich, die Rippen beliebig eng und doch gleichmäßig auf einem Rohr anzubringen. Im folgenden wird daher eine andere Technik angegeben, um Rippenrohre mit engem Rippenabstand und optimalem Wärmeübergang von der Rippe auf das Kühlrohr einfach herzustellen.

Die Idee besteht darin, einfach gelochte rechteckige Blechstreifen (z.B. aus Kupfer) abwechselnd als lange Rippe und als kurzer Abstandshalter auf das Kühlrohr (oder Heizrohr) aufzufädeln und anschließend das Paket zusammenzulöten (Abschnitt 2.221). Durch die Kapillareffekte der engen Spalte sowohl zwischen Rippe und Abstandshalter als auch zwischen dem Kühlrohrmantel und den Blechen ergibt sich eine sehr gute Verbindung, ähnlich wie man es bei der Verlötung von Kupferrohren in der Sanitärinstallation gewöhnt ist. Der Abstandshalter erfüllt eine wichtige zusätzliche Funktion dadurch, daß er die Wärmeleitung von der Rippe auf das Kühlrohr gerade im kritischen Bereich am Fuße der Rippe und beim Uebergang auf das Rohr verstärkt. Bei Rippen mit hitzeempfindlicher Oberfläche (Schutzschicht) kann (siehe Abschnitt 2.222) zunächst auf die obige Art eine Halterung mit perfekter Wärmeverbindung zum Rohr zusammengelötet werden, in die dann die Rippen gesteckt und anschließend durch Schrauben odgl. mechanisch festgepreßt werden. Zur Vergrößerung der Anströmfläche können schließlich mehrere Ebenen mit Rippen-Wüt in Parallelschaltung hintereinander gestaffelt werden (Abschnitt 2.223), wobei dieser „gestaffelte Rippen- Wüt" auch so gestaltet werden kann, daß sich eine Vergrößerung des Wärmeüberganges vom Kühlrohr auf das Kühlmittel ergibt (Abschnitt 2.224).

2.221 Grundtyp

In Bild 4 ist ein Beispiel für einen laminaren Rippen- Wüt für Rippen, die man ohne Schädigung verlöten kann, angegeben. Die rechteckigen Rippen 11 und die Abstandshalter 13 werden mit einer zentralen Bohrung 12 versehen und abwechseld auf ein Kupferrohr (in Bild 4 nicht eingezeichnnet) gesteckt, leicht aneinandergedrückt und von der gemeinsamen Kante der Bleche her verlötet. Als Material wird zweckmäßigerweise Kupfer gewählt: für die Rippen verwendet man beispielsweise eine Blechstärke von 0,5 [mm], für die Abstandshalter eine Dicke von 1 [mm].

Man kann auch zwei Rippen bzw. zwei oder mehr Abstandshalter direkt aufeinander folgen lassen und somit einen weiten Bereich von resultierenden Rippendicken und Abständen realisieren. Ebenso kann man lange Rippen mit mehreren genau übereinanderliegenden Löchern versehen und somit einen Zusammenbau von mehreren Kühlrohren erreichen. Auch außerhalb des Bereiches um das Kühlrohr kann man z.B. schmale Plättchen oder Drähte zwischen den Rippen anbringen, um die Geometrie des Zwischenrippenraumes zu stabilisieren. Das das Kühlrohr fassende Loch 12 muß auch nicht zentral angordnet sein, sondern kann bei breiten Rippen zu einer Kante hin versetzt sein, so daß man die Bleche von der nahen Kante her gut mit dem Kühlrohr verlöten kann.

Falls die Dicke Di der Rippen ihrem gegenseitigen Abstand s entspricht, lassen sich die gesonderten Abstandshalter 13 durch ein versetztes Anordnen von „halbseitigen" Rippen, die nur noch auf einer Seite in den Gasraum hineinragen, ersetzen. Diese Anordnung entspricht dem in Bild 6 wiedergegeben Schema für einen analogen Haltekörper, der im nächsten Abschnitt behandelt wird, wenn man die dortigen „Abstandshalter" 13 als „halbseitige" Rippen „11" auffaßt (und die Bohrungen 15 wegläßt). Die so verknüpften halbseitigen Rippen müssen nicht unbedingt um 180 Grad gegeneinander gedreht sein, auch andere Winkel wie beispielsweise 90 Grad ergeben für Spezialzwecke geeignete Konstruktionen; diese Modifikation wird z.B. im „Niedertemperatur Konvektionsheizgerät" (Abschnitt 2.32, Bild 14) angewendet.

## 2.222 Grundtyp für lötempfindliche Rippen

Im Kondensationsbereich des Abgases kann das Lötverfahren nach Abschnitt 2.221 (Bild 4) dann nicht mehr angewandt werden, wenn hitzeempfindliche Materialien, beispielsweise dünne Kunststoffolien oder sonstige korrosionsfeste Ueberzüge für die Metallrippen, eingesetzt werden. Man kann zwar bei sehr vorsichtiger Lötung mit einem Lot von niedriger Flußtemperatur den temperaturbeanspruchten Bereich auf die Nachbarschaft des Kühlrohres beschränken und diesen nachher wieder mit einem Ueberzug versehen, der dann gegebenenfalls auch einen kleinen Teil des Zwischenrippenraumes ausfüllt. Im folgenden soll jedoch gezeigt werden, wie man durch die getrennte Herstellung eines Haltekörpers das Verlöten der hitzeempfindlichen Rippen umgehen kann.

Der als Beispiel angegebene laminare Rippen- Wüt für lötempfindliche Rippen besteht aus einem fest mit dem Kühlrohr 12 verlötetem Haltekörper, in den die dem Kesselabgas 1 ausgesetzten Rippen 11 gesteckt und dann insgesamt fest verschraubt werden. Den Wüt kann man als eine Serienschaltung der in Bild 5 dargestellten Elementarzelle beschreiben. Diese Zelle besteht aus einem langen (13) und einem kurzen (14) Abstandshalter, die untereinander und mit dem Kühlrohr 12 zusammengelötet sind. Je zwei lange (13) und ein dazwischenliegender kurzer (14) Abstandshalter bilden eine kompakte Halterung. Die Kühlrippen 11 werden in ihrer Mitte, die vom korrosionsfesten Ueberzug ausgespart wurde und daher metallisch blank ist, in die Lücken zwischen den längeren Abstandshaltern 13 gesteckt. Durch ein Loch 15 in den Rippen 11 und entsprechend in den längeren Abstandshaltern 13 wird ein Bolzen gezogen, der dann am Ende festgeschraubt wird und somit die Rippen und die längeren Abstandshalter zusammenpreßt und damit auch thermisch fest miteinander verbindet. Anschließend wird der Bereich der Verschraubung und des gesamten Haltekörpers mit einem korrosionsfesten Material beschichtet bzw. vergossen, so daß nur noch die geschützten Rippen 11 dem Abgasstrom 1 ausgesetzt sind. - Eine Serienschaltung der Elementarzellen nach Bild 5 ist als WKK Bestandteil von Bild 15.

Für die Haltekörper lassen sich je nach Anforderung unterschiedliche Konstruktionen angeben. Der Haltekörper in Bild 5 besteht in Analogie zu Abschnitt 2.221 aus gelochten Abstandshaltern von zwei unterschiedlichen Längen, die abwechselnd auf das Kühlrohr 12 gesteckt werden. Der kurze Abstandshalter 14 besitzt die gleiche Materialdicke wie die Rippe 11, die Dicke des langen Abstandshalter 13 kann hingegen frei gewählt werden.

Der Haltekörper läßt sich konstruktiv vereinfachen, wenn man die Dicken von Rippe 11 und Rippenzwischenraum, der in Bild 5 von der Dicke des langen Abstandshalters 13 bestimmt wird, gleich wählt. Dann kommt man, wie in Bild 6 dargestellt, mit einem einzigen Typ von Abstandshaltern 13 aus, die mit ihrem "langen" Ende abwechselnd nach oben und nach unten weisen. Die "langen" Enden erfüllen die Funktion der seitlichen Halterung für die Rippen, die kurzen Enden dienen als Abstandshalter. Die obere und die untere Rippenreihe sind gegeneinander um eine Dicke versetzt.

Der kritischste Punkt der Wärmeübertragung ist der Uebergang von den Blechen (13, in Bild 5 auch 14) auf das Kühlrohr 12. Bei der Verlötung des Haltekörpers wird das Lot durch die Kapillarkräfte in die Zwischenräume gezogen; die Verhältnisse sind ähnlich wie in der Sanitärtechnik, eine gute metallische Verbindung ist also unproblematisch. Der Wärmeübergang von den Rippen 11 auf die Abstandshalter 13 ist hingegen weniger kritisch, da die Uebertragungsflächen sehr viel größer und dadurch die Wärmestromdichten entsprechend kleiner sind. Daher ist an dieser Stelle eine Verschraubung oder eine Verklebung mit einem geeigneten Metallkleber möglich. Bei einer handwerklichen Herstellung, bei der man nicht von ebenen und wulstfreien Abstandshaltern ausgehen kann, empfiehlt sich eine Kombination von Verschraubung und Verklebung, wobei der gut wärmeleitende Klebstoff alle Hohlräume ausfüllen wird.

Es soll noch angemerkt werden, daß man die Haltekörper bezüglich ihrer Orientierung zum anströmenden Fluid auch um 90 ° drehen und die Rippen dann in der Längsrichtung des Haltekörpers stumpf in die Halterung einführen kann (Bild 7). Der Abstandshalter 13 wird in den Fällen der Bilder 5 und 6 sinnvollerweise so lange sein, daß er die querliegende Rippe voll umschließt. Im Falle der längs liegenden Rippe (Bild 7) kann der Abstandshalter kürzer sein;

er muß nur noch so lange sein, daß die Schraube durch die Bohrung 15 festen Halt hat.

Mehrere Haltekörper können durch querliegende oder durch längsliegende Rippen starr miteinander verbunden werden.

2.223 Vergrößerung der Anströmfläche

Um das anströmende Gas in laminarer Strömung zu halten und mit möglichst kleiner Geschwindigkeit und daher niedrigem Druckverlust zwischen den Rippen hindurchzuleiten, muß man die parallel angeströmte berippte Querschnittsfläche vergrößern. Ohne den Apparatequerschnitt zu vergrößern kann dies nach Bild 8 dadurch erreicht werden, daß man die berippten-Querschnittsflächen in mehreren Ebenen staffelt. Jede Ebene besteht aus eng berippten Abschnitten, in denen der Wärmeübertrag abläuft, und dazwischenliegenden breitbandigen Kanälen, durch die der Gasstrom praktisch ungehindert hindurchtreten kann, um dann jedoch in einer anderen Ebene seinen eng berippten Abschnitt vorzufinden. In Durchströmungsrichtung durchläuft also jeder Teilstrom nur einen einzigen berippten Abschnitt, der auch ausschlaggebend für den vom Teilstrom zu überwindenden Serienwiderstand ist.

Ein Ausführungsbeispiel mit drei parallel angeströmten Ebenen ist in Bild 8 in einem Seitenschnitt parallel zur Anströmrichtung des Abgases 1 und rechtwinklig zur Längsrichtung der Kühlrippen (23, 25) dargestellt. Der Schnitt ist dabei so gelegt, daß die wärmeabführenden Kühlrohre, die waagrecht durch die Rippenpakete (23, 25) verlaufen, nicht berührt werden.

Zwischen den Seitenwänden 21 des Wüt strömt von oben das " heiße" Gas 1 auf die in drei Ebenen gestaffelten Anströmflächen. Ein Drittel des Gasstromes, im Bild 8 quantitativ durch die Anzahl der Pfeile gekennzeichnet, fließt bereits in der ersten Ebene durch die Rippenpakete 23, wird dort abgekühlt und anschließend mittels der Leitwände 22 durch die folgenden Ebenen im Bypass geleitet. Die restlichen Teilströme werden in der 1. Ebene durch Bypässe (27, 24) geführt; in der 2. Ebene wird dann ihre eine Hälfte wiederum im Bypass (26 bzw. von der Art 27) vorbeigeleitet, um schließlich in der dritten Ebene durch ein Rippenpaket der Art 23 bzw 25 geführt zu werden. Die andere Hälfte wird hingegen bereits in der 2. Ebene durch Rippenpakete 25 geführt und dann durch die 3. Ebene im Bypass der Art 24 geleitet.

Insgesamt gesehen wird also durch jede Ebene 1/3 des Gasstromes durch Kühlrippen geführt und 2/3 im Bypass vorbeigeleitet. Jeder Teilstrom findet in einer Ebene einen berippten Wärmetauscher und in den restlichen Ebenen einen Bypass vor.

Die Verhältnisse lassen sich auf n Anströmflächen verallgemeinern. Bei gleichmäßiger Belastung der n Ebenen fließt dann in jeder Ebene 1/n des Gasstromes durch den berippten Bereich und der Anteil (n-1)/n durch die Bypässe. Das Verhältnis der Gesamtlänge der berippten Bereiche zu demjenigen der Bypässe ist in jeder Ebene gleich. Die berippten Bereiche treten in 2 Breiten auf, wobei der größere (23 in Bild 8 ) die doppelte Länge des elementaren Rippenpaketes (25 in Bild 8) besitzt. Die Breite des elementaren Rippenpaketes (25 in Bild 8) sei r0; der durch das elementare Rippenpaket fließende Gasstrom definiert den elementaren Bypass (26 in Bild 8), seine Breite sei s0. Alle sonstigen Bypässe haben Breiten, die ein ganzzahliges Vielfaches von s0 betragen. Die gesamte Konstruktion läßt sich im wesentlichen, d.h. bis auf einen gemeinsamen Faktor, der sich aus der Anzahl m der parallel angeordneten Grundeinheiten (in Bild 8 ist m=2) ergibt, durch die 3 Parameter n, r0 und s0 beschreiben.

Für einen in n Ebenen gestaffelten Rippen- Wüt mit m parallelen Grundeinheiten gilt:

$$\text{Apparatebreite} = m^* [ 2^*r0 + 2^*(n-1)^* s0 ]$$

$$\text{Gesamtlänge der berippten Anteile} = m^* [ n^* 2^*r0 ]$$

Sei f..= Vergrößerungsfaktor für die parallel angeströmte Rippenfläche, also das Verhältnis der Gesamtlänge der berippten Anteile zur Apparatebreite. Dann gilt:

$$f = (n\, ^*2^*r0) / [ 2^*r0 + 2^* (n-1)^* s0] ,$$

woraus folgt::

$$f = n / [ 1 + (n-1) / (r0/s0 ) ] . \tag{8}$$

Aus der Gleichung (8) erkennt man, daß der Vergrößerungsfaktor f nur noch vom Längenverhältnis der elementaren berippten und unberippten Anteile, r0/s0 , und der Anzahl der Staffelebenen n abhängt. Sein oberer Grenzwert beträgt natürlich f = n .

Im Beispiel (Bild 8 ) wurde r0/s0 = 4 gewählt. Nach Gl. (8) ergibt sich hieraus ein Vergrößerungsfaktor f = 2, was man auch geometrisch bestätigen kann. Die Staffelung der Anströmfläche in 3 Ebenen führt hier also zu einer Halbierung der Geschwindigkeit im berippten Wüt. - (Der Wert r0/s0 = 4 wurde übrigens nur aus Darstellungsgründen gewählt, in praxi kann der Wert viel größer sein.)

Von dem hier idealtypisch dargestellten weitgehend symmetrischen Aufbau mit einer gleichmäßigen Belastung aller Ebenen kann natürlich im Einzelfall auch abgewichen werden. Von einer Aufzählung der naheliegenden Varianten soll hier abgesehen werden.

### 2.224 Erhöhung des Wärmeüberganges im Kühlrohr

Bei kleinem Rippenabstand s kann alpha, der Wärmeübergangskoeffizient vom Fluid auf die Rippe, nach Gl.(4) sehr groß werden. Dann kann es vorkommen, daß nicht mehr die Wärmeaufnahme über die Rippe sondern der Wärmeübergang vom Rohr auf das Kühlmittel zum Engpaß wird. Diese Schwachstelle kann verbessert werden durch:

- Eine Verbesserung des Wärmeübergangskoeffizienten im Rohr durch konstruktive Maßnahmen, z. B. durch Einfügung eines Verdrängungskörpers im Rohr zur Erhöhung der Geschwindigkeit des Kühlmittels (vergleiche hierzu auch Abschnitt 2.231).
- Eine Vergrößerung der wirksamen Wärmeübertragungsfläche.
- Eine Beschränkung auf kleine Rippenlängen

Eine Vergrößerung der wirksamen Wärmeübertragungsfläche kann auch dadurch bewirkt werden, daß über die Länge des gesamten Kühlrohres hinweg berippte Teile von unberippten Teilen unterbrochen werden. Der Wärmefluß über die Rippen auf die Rohrwand erfolgte natürlich nur über die berippten Teile, der Wärmeübergang vom Rohr auf das Kühlmittel geschieht jedoch auch noch in den benachbarten Rohrbereichen, die nicht mehr berippt sind. Diese werden nämlich noch durch die axiale Wärmeleitung in der Rohrwand erwärmt.

Zur technischen Realisierung eignet sich der im Abschnitt 2.223 angegebene gestaffelte Rippen-Wüt (Bild 8), dessen Proportionen jedoch verändert werden. Die berippten (23,25) und unberippten (24,27) Bereiche werden nämlich jetzt nicht mehr unter dem Blickwinkel der Verlangsamung der Strömungsgeschwindigkeit, sondern unter dem Gesichtspunkt der Ausnutzung von freien unberippten Rohrlängen zur Wärmeübertragung auf das Kühlmittel gesehen.

In der Praxis kann das dazu führen, daß das Verhältnis zwischen beripptem und unberipptem Bereich, r0/s0 , auch relativ niedrig gewählt werden kann und die Anzahl m der Grundeinheiten erhöht wird. Die die Konstruktion bestimmende Größe ist hierbei die Länge des unberippten Rohres, in den aus dem berippten Bereich heraus noch ein spürbarer Wärmefluß möglich ist. Auch ein Verhältnis r0/s0 = 1 oder sogar noch darunter ist durchaus möglich. Schließlich kann die axiale Wärmeleitung im Rohr noch gezielt vergrößert werden, z.B. durch dicke oder verdickte Rohrwände. Dies läßt sich auf viele Arten realisieren; beispielsweise dadurch, daß man über das Kühlrohr weitere Rohrstücke schiebt und verlötet, oder daß man kein handelsübliches kreisrundes Rohr benutzt sondern einen Rechteckstab aufbohrt; auch die im Abschnitt 2.221 beschriebenen Abstandshalter (z.B. 13 in Bild 4) können für diesen Zweck eingesetzt werden.

Ein Ausführungsbeispiel für einen gestaffelten Rippen-Wüt, der im Hinblick auf einen größeren Wärmeübergang vom Rohr in die Flüssigkeit angepaßt wurde, wird in Bild 8a bis Bild 8c angegeben. In Bild 8a ist zunächst ein Rippenrohr-Element 80 mit gleich langen berippten Abschnitten 25 und unberippten Abschnitten 26 angegeben; die axiale Wärmeleitung des Kühlrohres 12 wird im unberippten Bereich 26 durch eine Wandverdickung 81 nach einer der oben angegeben Methoden vergrößert. Im Bild 8b sind zwei Rippenrohr-Elemente 80 (aus Bild 8a ) zu einem einfachen gestaffelten Rippen-Wüt zusammengefügt. Da hier r0= s0 und n= 2 gilt, ergibt sich nach Gl. (8) als Vergrößerungsfaktor f = 1.0 , - was man natürlich auch unmittelbar aus der Zeichnung ablesen kann.

In Bild 8c ist schließlich ein etwas komplizierter gestaffelter Rippen-Wüt skizziert. Wie bereits in Bild 8 handelt es sich bei Bild 8c um einen Seitenschnitt parallel zur Anströmrichtung des Gases 1 und senkrecht zur Längsrichtung der Rippenpakete 25. Die Länge der berippten Rohrabschnitte 25 beträgt nur ein Viertel der Länge der unberippten Abschnitte 26 . Zwischen den Kanalwänden 21 sind in 8 Ebenen die Rippenrohr-Elemente 80 eingezeichnet, wobei der offene rechte Rand andeuten soll, daß es sich nur um die ersten drei Grundelemente (m = 1 bis 3) handelt. Die Grundelemente sind jeweils durch die Leitwände 83 begrenzt. Die 8 Ebenen zerfallen in ein oberes und ein unteres Viererpaket; die Gasflüsse durch die berippten Teile 25 der beiden Viererpakete werden durch die strömungsgünstig geformten Leitwände 22 getrennt.

Zur Berechnung des Vergrößerungsfaktors f nach Gl. (8) faßt man die oberen 4 und die unteren 4 Ebenen zu je einer „effektiven" Ebene zusammen, was n= 2 ergibt. Die gesamte Länge der berippten Abschnitte eines derartigen Viererpaketes, also das Vierfache der Länge eines Rippenpaketes 25, bezeichnet man mit r0; die Lücke 86 zwischen dem oberen und dem unteren Viererpaket bezeichnet man mit s0. Mit r0/s0= 4 und n= 2 ergibt sich nach Gl. (8) als Vergrößerungsfaktor f= 1.6 - was man natürlich auch unmittelbar aus der Zeichnung ablesen kann.

Für eine gleichmäßige und strömungsgünstige Aufteilung der Gasströme auf die Rippenpakete der vier unteren Ebenen sind schließlich noch Leitbleche 82 erforderlich (von denen in Bild 8d der Uebersichtlichkeit wegen nur das wichtigste eingezeichnet wurde).

Eine zunächst trivial erscheinende Aufhebung der eingangs erwähnten Schwachstelle des zu großen Wärmewiderstandes zwischen Rohrwand und Kühlflüssigkeit besteht darin, daß man sich bei kleinen Spalten zwischen den Rippen eben mit kurzen Rippenlängen begnügt. Bei der Herstellung der Rippen nach Abschnitt 2.221 oder 2.222 verursachen jedoch kurze Rippen fast den gleichen Aufwand wie lange Rippen , so daß dieser Weg keine Freude bereitet. Trotzdem führt kein Weg an der Erkenntnis vorbei, daß bei einem hohen Wärmeübergangskoeffizienten alpha im Gasraum für eine vorgegebene innere Übertragungsfläche im Kühlrohr nur ein entsprechend kleiner Bereich des Anströmquerschnittes sinnvoll ausgenutzt werden kann.

Bisher haben wir diesen „Wirkungsquerschnitt" durch radiale Rippen ausgeschöpft. Bei kleinen nutzbaren Längen ist es jedoch vorteilhafter, den verfügbaren „Wirkungsquerschnitt" durch „axiale Rippen" auszuschöpfen. Unter axialen Rippen verstehe ich Rippenpakete, die parallel zum Kühlrohr verlaufen und in kurzen Abständen durch metallische Abstandshalter untereinander und mit dem Kühlrohr verbunden sind. Die Abstandshalter zwischen den Rippen wirken also gewissermaßen als Rippenfuß und verankern die Rippen thermisch am Kühlrohr.

In Bild 8d ist eine Draufsicht des **axialen Rippen-Wüt** gezeigt. Das abzukühlende (oder aufzuheizende) Gas strömt von oben durch die Papierebene durch die von den Rippen 11 gebildeten „ZwischenRippenkanäle". Der von einer Rippe 11 aufgenommene Wärmestrom fließt zunächst axial, also parallel zum Kühlrohr 12, zum nächsten Rippenfuß 92 und von dort radial auf die mit dem Kühlrohr 12 fest verlöteten oder verschweißten Aufnahmeköpfe 91. Der Aufnahmekopf 92 besteht aus einem Stück rechteckigem Kupferstab, der mit einer zentralen Bohrung versehen ist. Durch diese Bohrung wird das Kühlrohr 12 gesteckt und verlötet.

Zur weiteren Ausgestaltung des axialen Rippen-Wüt sollte man beachten, daß der axiale Wärmestrom an den Aufnahmeköpfen 92 am größten ist und dann längs der Kühlrohrwand abnimmt. Daher sollte man insbesondere im Anschluß an die Aufnahmeköpfe 92 für die oben erwähnten Verdickungen (vergleiche 81 in Bild 8a) sorgen. Außer nach der Wanddicke richtet sich der Abstand zwischen den Aufnahmeköpfen 92 auch nach dem Wärmeübergang zwischen Rohrwand und Kühlflüssigkeit. Bei Öl als Kühlflüssigkeit kann er beispielsweise größer sein als bei Wasser.

Als Faustformel für die Anzahl $N_R$ der Rippen im Rippenpaket kann man sich daran orientieren, daß die Größe S_alpha ,

$$S\_alpha = 2* N_R * alpha , \text{ mit alpha aus Gl.( 4) },$$

etwa der Wärmeübergangszahl alpha_W von der Rohrwand auf die Kühlflüssigkeit entsprechen sollte.

Die (axiale) Länge der Abstandshalter 13 sollte nicht kleiner sein als die Summe der Dicken der von ihnen thermisch entsorgten Rippen; wobei die rohrnahen Abstandshalter eher länger sein sollten.

Einzelne Elemente von axialen Rippen-Wüt 90 lassen sich an den Rippenfüßen 92 zusammenschalten. (Die „Anschluß"-Abstandshalter 13 sind in Bild 8d bereits eingezeichnet.)

Im übrigen ist noch anzumerken, daß sich der axiale Rippenwärmetauscher auch gut für den Einsatz von lötempfindlichen Rippen eignet, da die Rippenfüße auch geschraubt werden können.

## 2.23 HGK

Der Heißgaskühler (HGK) besitzt eine doppelte Aufgabe: einerseits soll er das heiße Kesselabgas auf eine für den Wasserkondensationskühler (WKK) verträgliche Temperatur abkühlen, also beispeilsweise auf unter 100 [°C], und andererseits soll er dafür sorgen, daß das Kaminabgas die Druckbedingung des Kamines nach DIN 4705 erfüllt. Falls die besondere Ausführung des Kamines bzw. der Druckerzeugung die thermische Einhaltung der Druckbedingung nicht erfordert, reduziert sich der HGK auf einen einfachen Gas-Wasser-Wüt, der bei hohen Abgastemperaturen betrieben wird und keinen besonderen Korrosionsschutz erfordert, da konstruktiv die Kondensation des Wasserdampfes nicht unterschritten wird. Bei thermischer Erzeugung der Druckbedingung nach DIN 4705 muß dieser Gas-Wasser-Wüt noch zusätzlich eine Wärmeübertragung auf die entgegenströmenden bereits etwas angewärmten Komponenten des Kaminabgases bzw. nach Bild 2 nur auf die Fremdluft-Komponente liefern. Der HGK kann als laminarer Rippen- Wüt nach Abschnitt 2.221 ausgeführt werden. Ein Konstruktionsbeispiel ist in Bild 15 enthalten.

2.231 Der HGK- Vorwärmer

Die Kondensationsfreiheit des HGK wird am einfachsten dadurch sichergestellt, daß das ankommende Rücklaufwasser der Heizung zunächst durch den bereits im HGK erhitzten Auslauf des HGK in einem Wasser-Wasser-Wüt kleiner Leistung, dem **HGK- Vorwärmer**, im Gegenstrom soweit vorgewärmt wird, daß das Eintrittswasser in den HGK bereits knapp über der Taupunktstemperatur des Abgases liegt. Der HGK- Vorwärmer läßt sich einfach als koaxialer "Doppelrohr-Wüt" realisieren (Bild 9).

Die Durchflußmenge durch den HGK muß so eingestellt werden, daß der Temperaturhub im HGK für die gewünschte Vorwärmung des Einlaufwassers ausreicht. Durch eine thermostatische Regelung (z.B. Bypass mit Thermostatventil) kann der Durchfluß bei sehr kaltem Rücklauf, also beispielsweise beim morgendlichen Anfahren der Heizung, auf einen kleinen Wert und dadurch großen Temperaturhub eingestellt werden. Bei höherer Rücklauftemperatur kann dann der Durchfluß vergößert werden; dadurch lassen sich unnötig hohe Temperaturen im HGK vermeiden.

In Bild 9 wird die Ausführung eines HGK- Vorwärmers aus koaxial ineinander geschobenen Kupferrohren (31,33) gezeigt, wobei alle Elemente (z.B. T-Stücke (32) und Absatznippel (34) ) standardmäßig als Sanitär- Installationsmaterial erhältlich sind. Heizungswasser (41) wird dem Innenrohr (33) zugeführt und im Gegenstrom vom heißen Rücklaufwasser (42) des HGK vorgewärmt. Da die beiden Wasserströme 41 und 42 den Zu- und den Ablauf des HGK darstellen, also gleich sind, sollte man auf ungefähr gleiche Querschnitte im Innenrohr (33) und im Mantelraum achten. Dies erreicht man beispielsweise, wenn man das Außenrohr (31) aus 15 mm und das Innenrohr (33) aus 10 mm Standardrohren fertigt; beide Rohre lassen sich mit 15A-10 mm Absatznippel (34) verbinden.

Der externe HGK- Vorwärmer wird sinnvollerweise in den Fremluftkanal gelegt, so daß seine Verlustwärme von der Fremdluft vollständig aufgenommen werden kann.

Der koaxiale Vorwärmer kann auch als **"interner HGK- Vorwärmer"** direkt als Kühlrohr im HGK eingesetzt werden (Bild 10), wenn am Ende das Innenrohr 33 offen bleibt und das Außenrohr 31 durch eine Kappe 35 oder Stopfen abgeschlossen wird. Das Innenrohr kann durch drei Stifte endseitig zentriert und fixiert werden. Die Rippen 11 des Wüt erwärmen also direkt das bereits vorgewärmte Heizungswasser 42, das zwischen Innenleiter und Außenleiter des Doppelrohres fließt und seinerseits das direkt ankommende Heizungswasser 41 vorwärmt. Auch der interne HGK- Vorwärmer kann vollständig aus Standard Kupferrohren und - fittings (32,34) gebaut werden.

Durch dieses koaxial vorgewärmte Kühlrohr werden mehrere erwünschte Effekte erreicht:

(1) eine gesonderte Rückleitung wird gespart.
(2) die Strömungsgeschwindigkeit im Raum zwischen den Rohren ist etwa genauso hoch wie im Innenrohr (bei 15 und 10 mm Rohren). Dadurch wird die Wärmeübertragung von den Rippen auf das Rohr bzw auf das Wasser erhöht.
(3) Das Kühlwasser muß keine Uebertemperatur annehmen, da es bereits an Ort und Stelle vom Innenrohr gekühlt wird. Dadurch wird die Wärmeaufnahme verbessert und die Auslegung ist weniger kritisch.

Als theoretischer Nachteil muß jedoch gesehen werden, daß der Wärmeübertrag auf das Innenrohr, - eben weil keine Uebertemperatur auftritt und auch weil kein thermischer Gegenstrom realisiert ist -, im Vergleich zum herkömmlichen Doppelrohr nach Bild 9 verringert ist.

Für den HGK- Vorwärmer lassen sich kleine Vorteile dadurch errechnen, daß man den HGK nicht mit dem ankommenden Heizungsrücklauf sondern mit wärmerem Kühlwasser, beispielsweise mit dem **Heizungsvorlauf**, kühlt. Unter Umständen kann dann beispielsweise auf eine thermostatische Regelung verzichtet werden. Da der HGK- Vorwärmer jedoch unproblematisch zu sein scheint, wird der erhöhte Schaltungsaufwand sich in vielen Fällen kaum lohnen.

Selbstverständlich ist auch jede andere Form eines Wasser-Wasser-Wüt für eine kleine Leistung, - es werden ja durch die Vorabkühlung im HGK nur maximal etwa 5 % der Feuerungswärme übertragen - , verwendbar.

### 2.24 WKK

Der Wasserkondensationskühler (WKK) entzieht dem durch den Heißgaskühler (HGK) auf Temperaturen unterhalb beispielsweise 100 oder auch 80 Celsius abgekühlten Kesselgas die restliche noch auf den Heizungsrücklauf übertragbare Wärme, wobei das Hauptaugenmerk auf der möglichst weitgehenden Ausnutzung der Kondensationswärme des im Abgas vorhandenen Wasserdampfes liegt. Hierbei wird die Temperaturobergrenze durch die Vorschaltung des HGK konstruktiv bei allen Betriebszuständen eingehalten und kann darüberhinaus auch durch eine entsprechende Temperatursicherung, etwa analog dem Uebertemperaturschutz des Kesselwassers, garantiert werden.

Selbstverständlich läßt sich der WKK auf herkömmliche Art unter Verwendung hochwertiger korrosionsfester Stähle herstellen und dann auch mit dem HGK konstruktiv zusammenfassen, wie dies bei den herkömmlichen Brennwertgeräten der Fall ist. Die Nachteile liegen in der schlechten Wärmeleitfähigkeit und aufwendigen Bearbeitung der Werkstoffe - also letztendlich im Preis. Daher soll im folgenden ein Ausführungsbeispiel für den WKK angegeben werden, der die gute Wärmeleitung des Kupfers (oder auch Aluminiums) ausnutzt.

Der WKK ist als Rippen- Wüt für lötempfindliche Rippen (Bild 5) gemäß Abschnitt 2.222 mit einer Modifizierung für vergrößerte Anströmflächen in 2 Ebenen (Bild 11) nach Abschnitt 2.223 ausgeführt.

Die Wärmeaufnahme erfolgt über schmale (z.B. 20 mm breite) Kupferrippen (11 in Bild 5), die mit einer gut und langzeitig haftenden dünnen Kunststoffolie beklebt sind. Die Breite der Rippe wurde an die Breite der Handelsform der Polyester- Klebefolie, die als 50mm breites Band verkauft wird, angepaßt: die Klebefolie wird an der oberen Kante der Rippe umgeschlagen, ihre beiden Ränder werden knapp unter der unteren Kante der Rippe miteinander verklebt. Auch eine Rippenbreite von etwas unter 50 mm wäre empfehlenswert, wobei dann die Vorder- und Rückseite der Rippe nicht mit einem eingeschlagenen Band sondern von zwei getrennten an ihren beiden längsseitigen Enden miteinander verklebten Bändern beklebt wird. Wegen des kleinen Wärmewiderstandes der dünnen Folie verringert diese Kaschierung des Kupferbleches die breitflächige Wärmeaufnahme nur geringfügig. Die hohe Wärmeleitfähigkeit des Kupfers wird nämlich vor allem für die Ableitung der Wärmeströme auf die Halterung und dann auf das Kühlrohr benötigt.

Zur Verringerung des Druckabfalles wurde von der Methode, die parallele Anströmfläche durch Staffelung der Rippen in zwei Ebenen (nach Abschnitt 2.223) zu vergrößern. Gebrauch gemacht. Dies wird dadurch realisiert, daß in den Bypassbereichen einfach die untere bzw. die obere Rippe 11 der Elementarzelle ( Bild 5) weggelassen wird und die obere und untere Reihe der Rippenpakete entsprechend Bild 11 durch Leitflächen 22 (beispielsweise) aus dünnen und daher noch flexiblen Kunststoffplatten verbunden werden. Im Bereich der Halterung liefern die Lücken zwischen den Rippenpaketen, die sich durch die Bypässe (24, 26) ergeben, den nötigen Platz, um die Schrauben zur Befestigung und Verpressung der Rippen unterzubringen.

Falls die Größe der Anströmfläche unkritisch ist, kann der Wüt für lötempfindliche Rippen (Bild 5, bzw. Bild 6) unverändert als WKK eingesetzt werden. Bei langen Rippenreihen können sich kleine Differenzen zwischen der Rippendicke und der Breite der Zwischenräumen in der Halterung (Rippenfutter) , die sich durch die Verlötung ergeben, aufsummieren. Dann ist durch zusätzliche Abstandsbleche in einigen Zwischenräumen für einen Ausgleich zu sorgen.

## 2.3 LuftKondensationskühler (LKK)

Im Luftkondensationskühler (LKK) wird das vorabgekühlte Abgas, das im Wasserkondensationskühler (WKK) bereits den auf das Rücklaufwasser der Heizung übertragbaren Anteil seiner Kondensationswärme verloren hat, durch Umgebungsluft (oder auch, falls verfügbar, Frischluft) weiter abgekühlt und dadurch weiter entfeuchtet. Ein Teil der im Gegenstrom vorgewärmten Umgebungsluft wird anschließend als Fremdluft zur weiteren Absenkung des Taupunktes und zur Erzeugung von Auftrieb dem Kesselabgas wieder zugemischt. Im Abschnitt 2.31 wird eine einfache Ausführung des LKK- Wüt, die Gebrauch von vorgefertigten Kunststoffbauelementen aus einem anderen Einsatzgebiet macht, angegeben. Danach wird im Abschnitt 2.32 der Umluftkühler des LKK als Splitgerät mit einem gesonderten niedertemperaturigen Wasserheizkreis ausgeführt und auch noch weitere Modifikationen angegeben. Im Abschnitt 2.33 wird schließlich ein Hinweis darauf gegeben, wie durch Einsatz des Luftventilators des LKK- Wüt sich auch die Druckverhältnisse des Abgases im AGW verbessern lassen.

2.31 Ein einfacher Luft-Abgas-Wüt

Bei Eintritt in den LKK ist das Kesselabgas durch die vorgeschalteten Wüt des AGW soweit abgekühlt, daß der LKK vollständig aus Kunststoff gefertigt werden kann und auch sollte, da das Kondensat korrosiv ist, und bei dem Luft-Abgas-Wüt die besonderen Anforderungen an Druckfestigkeit und Sauerstoffdiffusion, wie sie bei dem WKK auftreten, nicht mehr bestehen. Als Grundkonzept kann von einem Kreuzstromwärmetauscher ausgegangen werden, der an die besonderen Aufgaben des LKK angepaßt wird (Bild 12).

Der Wärmeübergang auf der Abgasseite ist durch die Kondensation deutlich erhöht, was dem Bestreben, im Abgaszweig mit den Druckverlusten haushälterisch umzugehen, sehr entgegenkommt. Auf der Luftseite, wo ein externes Gebläse sowieso unumgänglich ist, muß und kann ein guter Wärmeübergang durch entsprechenden Druckaufwand erzwungen werden. Berücksichtigt man den Sonderfall, daß die Kondensation im vorgeschalteten WKK wegen einer überhöhten Rücklauftemperatur ausfällt, so sollte man den Luftstrom im LKK so groß auslegen, daß notfalls auch ein Großteil der gesamten Kondensationswärme aufgenommen werden kann. Bei Erdgas entspricht dies etwa dem 10 fachen Wert des stöchiometrischen Abgasstromes.

Die aufgewärmte Umluft sollte frei von Abgasbestandteilen sein. Dies wird dadurch garantiert, daß die Luft im LKK einen Ueberdruck zum Kesselabgas besitzt, so daß bei einem Leck nur zusätzliche Fremdluft in das Abgas gelangt, was unbedenklich ist und an anderer Stelle sowieso erfolgt. Daher darf die Luft nicht durch den LKK gesaugt werden sondern muß durch ihn gedrückt werden; das Gebläse muß also an den Lufteintritt gesetzt werden.

Der obere, dem ankommenden Kesselabgasstrom zugewandte Teil des Luftstromes wird als Fremdluft benutzt. Daher wird sein Weg durch den Wüt verdoppelt, was einen möglichst großen Temperaturhub bewirken soll. Das Kesselabgas wird nach seinem Durchgang durch den Wüt um 180 Grad umgelenkt und nach oben zurückgeführt. Im oberen Teil des Wüt erfogt eine Erwärmung durch die dort besonders weit aufgeheizte Kühlluft.

Im Konstruktionsbeispiel (Bild 12) wird der LKK aus handelsüblichen Stegplatten (51,53 und 57), die in ihren Kanälen die Luft (4, 5) und zwischen ihren Platten das Kesselabgas 1 führen, gebaut. Der LKK besteht aus einem Stamm, in dem das aus dem WKK kommende Kesselabgas 1 abwärts durch die Wüt 51 und 53 fließt; ein rechtsseitiger Seitenarm (55,58) dient zur Fortleitung und Wiederaufheizung des Kesselabgases 1, ein linksseitiger Seitenarm 59 für den Abtransport der Fremdluft 5.

Mehrere Stegplatten werden parallel angeordnet. Der Abstand zwischen den Platten wird durch am seitlichen Rand befestigte Leisten, die gleichzeitig den Abgasstrom am seitlichen Austreten hindern, festgelegt. Bei Bedarf können im Innenbereich noch zusätzliche Abstandshalter in Strömungsrichtung des Kesselabgases verlegt werden.

Das ankommende Kesselabgas 1 strömt zunächst von oben in den Fremdluft- Wüt 51 und danach durch den Umluft- Wüt 53. Nach Richtungsumkehr im Unterraum 54 strömt es rechts durch den "Abgas"- Seitenarm 55 wieder nach oben und wird im Wüt 57 wieder etwas aufgewärmt. Danach verläßt das Kesselabgas den LKK über den Kanal 58.

Durch das Gebläse 60 wird von links Umgebungsluft (4,5) angesaugt und in den Verteilungsraum 52 gedrückt. Der Umluftanteil 4 wird durch den unteren, kälteren Teil des LKK, den Umluftkühler 53, gedrückt und an dessen Ausgang im Fortluftkanal 56 gesammelt und nach außen geführt. Vom Fortluftkanal 56 aus kann die nur leicht erwärmte Fortluft auch in einem Kanal oder Rohr zu einem Einsatzort im Keller mit besonderen Wärmeansprüchen (z.B. "Hobbyraum") oder beispielsweise auch in das Treppenhaus weitergeleitet werden. Da der Wärmeinhalt der Fortluft relativ niedrig ist, rentiert sich allerdings keine aufwendige Installation.

Die Fremdluft 5 wird aus dem Verteilungsraum 52 in den unteren Teil des Fremdluft- Wüt 51 gedrückt. Dieser wird insgesamt in einer Schleife durchströmt, wobei zumindest ein Teil der Fremdluft 5 noch durch den Seitenzweig 57 hin und zurück fließt und dort das nach oben abfließende Kesselabgas 1 mit Niedertemperaturwärme wieder aufheizt. Im oberen Teil des Fremdluftteiles 51 des LKK wird die Fremdluft 5 dann direkt von dem ankommenden Kesselabgas 1 auf "niedertemperaturige Endtemperatur" gebracht und strömt anschließend über den Seitenarm 59 aus dem LKK heraus.

Die handelsüblichen Stegplatten sind als durchsichtige Bauelemente mit besonderen Anforderungen an das Aussehen, Beständigkeit gegen uv-Licht usw. konstruiert. Sie lassen sich zwar für den Bau eines LKK gut einsetzen, ihre für den LKK nicht notwendigen Eigenschaften führen jedoch zu einer vermeidbaren Verteuerung. Bei Massenproduktion sollten daher für die Anwendung im LKK eigene Stegplatten , z.B. aus Polypropylen (PP), hergestellt werden. Diese können auch in ihren Abmessungen und Materialstärken auf ihren Einsatz im LKK hin angepaßt und optimiert werden.

2.32 Ein gesplitteter LuftKondensationskühler und andere Alternativen

Beim LKK wird direkt am Ort unabdingbar nur der am stärksten erwärmte Teil der Kühlluft genutzt, der als Fremdluft eingesetzt wird. Wird die erwärmte Umluft nur zur Erwärmung des Kellers genutzt, so ist dies zwar wegen der Wärmekopplung an zu beheizende Räume keineswegs sinnlos; ein Transport der Niedertemperaturwärme dürfte jedoch in vielen Fällen erwünscht sein. Daher liegt es nahe, anstelle des Umluft-Wüt (53 in Bild 12) einen gesplitteten Wüt zu benutzen (Bild 13), der in einem eigenen Niedertemperatur- Heizkreis die niedertemperaturige Wärme im LKK aufnimmt und sie an anderer Stelle zur Erwärmung beispielsweise eines bestimmten Raumes wieder abgibt. Durch die relativ einfache Verlegung der Heizwasserleitung kann diese Wärmeübergabe an eine Außenwand gelegt werden und dort beispielsweise durch einen geeignet modifizierten und optimierten Konvektionswärmetauscher (siehe unten) Frischluft erwärmt werden. Dadurch ergibt sich eine niedrige Temperatur des Rücklaufes des Niedertemperatur- Heizkreises, was zu einer noch weitgehenderen Ausnutzung der Kondensationswärme des Abgases führt.

Im Bild 13 ist zur Realisierung des gesplitteten LKK der Umluftkühler 53 des Bildes 12 durch einen Abgas-Wasser Wüt 66, wie er als Wasserkondensationskühler (WKK) bereits im Abschnitt 2.24 besprochen wurde, ersetzt. Die Rückwärmung des Kesselabgases wird ebenso wie die Aufwärmung der Fremdluft durch einen Gas-Abgas -Rippen-Wüt 65, wie er in ähnlicher Form auch als Heißgaskühler(HGK) eingesetzt werden kann (siehe Abschnitt 3.0), bewirkt; allerdings müssen jetzt wegen der Korrosionsgefahr die Rippen im Abgasraum mit einer Schutzfolie beklebt werden. In Bild 13 ist der ursprüngliche Fremdluftkühler 51 aus Bild 12 zwar noch weiterhin aufgeführt; bei entsprechender Auslegung des linken Seitenarms von 65 dürfte er jedoch nur noch im bescheidenen Umfang zur Erwärmung der Fremdluft beitragen. Wird der Plattenwärmetauscher 51 weggelassen, so strömt die Fremdluft 5 direkt vom Lufteinlaßraum 52 durch den linken Seitenarm des Luft-Abgas Rippen Wüt 65 in den linken Seitenkanal 59.

Durch Anwendung von gestaffelten Rippenwärmetauschern ((vgl. Abschnitt 2.223) mit einem hohen Wärmeübergang aufgrund kleiner Rippenabstände (vgl. Abschnitt 2.221) und wasserseitiger Serienschaltung derartiger Wüt zur Annäherung des Gegenstromprinzips können kompakte und preisgünstige Wasser- Luft- Konvektionswärmetauscher (Bild 14) gebaut werden. Bei Betrieb mit Gebläse können auch kleine Temperaturdifferenzen noch ausgenutzt werden.

Zur Optimierung des gesplitteten LKK kann ein derartiges Niedertemperatur Konvektions Heizgerät (NT-KHG) nach Bild 14 mit zwei Lufteinlässen ausgestattet werden: Am unteren Ende wird das bereits vorabgekühlte Heizkreis-Wasser am tiefsten abgekühlt durch die Kühlung im Rippen-Wüt 71 und zwar mit Frischluft 74, deren Menge auf die Bedürfnisse des Aufstellungsortes abgestimmt ist (im Keller beispielsweise auf den Verbrennungsluftbedarf). Da die Luftwärme vor Ort genutzt wird, Kanäle zum Lufttranport also entfallen, muß auf die Größe der Temperaturerhöhung der Umluft 4, die über die Umluftklappe 75 strömungsmäßig hinter dem Frischluft-Wüt 71 zugeführt wird, nicht besonders geachtet werden. Zur Flexibilität des NT-KHG kann eine Umluft-Reserveklappe 76 vorgesehen werden, die auch bei einem 100 %igen Umluftbetrieb die Wärmeübertragungskapazität des Kühlers 71 nutzen kann. Das Gebläse 70 saugt die Frischluft 74 über den Frischluft-Wüt 71 und die Umluft 4 über die Umluftklappe 75 gemeinsam an, vermischt beide Bestandteile und drückt sie über die haubenförmig angeordneten Rippen-Wüt 72 als Zuluft in den zu beheizenden Raum. Das Gebläse 70 kann mit „Leitschaufeln" (hier nicht eingezeichnet) versehen werden, um die Zuluft gleichmäßiger und mit geringerem Druckaufwand auf die an den Seitenflächen und oben angebrachten Rippen-Wüt 72 zu verteilen

Je nach Durchsatz kann vor allem der Frischluft-Wüt 71 auch als „gestaffelter Rippen-Wüt mit vergrößerter Anströmfläche" nach Abschnitt 2.223 ausgeführt werden.

Das Wasser in den Kühlrohren 12 der Rippen 11 durchfließt die einzelnen Wüt am günstigsten in Serienschaltung, wobei zur Begrenzung der Stömungsgeschwindigkeit eine teilweise (z.B. paarweise) Parallelschaltung der Rohre ohne großen Einfluß bleibt. Wichtig ist jedoch, daß der Frischluft-Wüt 71 als letzter durchflossen wird.

## 2.33 Fremdluft-Injektor

Der Ehrgeiz des Konstrukteurs sollte darauf gerichtet sein, die Druckverluste im AGW so gering zu halten, daß ein gesonderter Abgasventilator für diesen Bereich nicht erforderlich ist. Eine Hilfe hierzu bietet die Möglichkeit, den Fremdluftstrom, der ja vom unabdingbar notwendigen Luft- Ventilator (60 in Bild 12 oder Bild 13) in geeigneter Auslegung angetrieben wird, mit hoher lokaler Geschwindigkeit in den Kesselabgasstrom einzuleiten. Durch diese Injektionswirkung wird ein lokaler Unterdruck erzeugt, der eine Saugwirkung auf das Kesselabgas ausübt und somit dabei hilft, die Strömungswiderstände des AGW zu überwinden. Die Injektion der Fremdluft kann am Ausgang des AGW (wie in Bild 15 dargestellt) oder sogar direkt im Kamin erfolgen; gegebenenfalls kann die Fremdluftleitung sogar noch eine gewisse Wegstrecke im Kamin geführt werden, so daß die Injektionswirkung auch dem eigentlichen Kaminzug zugute kommt.

Es sei darauf hingewiesen, daß es ein etabliertes Verfahren ist, den Zug eines Kamines dadurch zu verstärken, daß man mit einem gesonderten Gebläse einen Teilstrom des Abgases aus dem Kamin entnimmt und ihn mit hoher Geschwindigkeit wieder in den Kamin hineinbläst (siehe Recknagel-Sprenger /8/). Die besonderen Verhältnisse des LKK mit seinem bereits aus anderem Anlaß vorhandenen Luftgebläse ermöglichen die Ausnutzung dieses Prinzipes mit nur ganz geringfügigem Zusatzaufwand.

Insbesondere bei der Installation eines AGW hinter einem Kessel ohne Gebläse, z.B. einem atmosphärischen Gaskessel, dürfte die Fremdluft-Injektion hilfreich sein.

### 2.4 Wärmeabgabe im Schornstein

Die Temperaturverhältnisse des Kaminabgases im Schornstein müssen die <u>Druckbedingung</u> der DIN 4705 (Gl. (1) von /2/) erfüllen, also den für die Ableitung der Abgase notwendigen Unterdruck garantieren. Der Auftrieb der gesamten Abgassäule kann mit ausreichender Näherung durch die Differenz zwischen der mittleren Temperatur des Abgases im Kamin, $T_m$, und der Außentemperatur beschrieben werden. Setzt man für die Außentemperatur den Auslegungswert der DIN 4705 ein, so erfordert diese Norm eine über die Länge des Kamines gemittelte Abgastemperatur, die durch die Geometrie des Kamines und die Geschwindigkeit des Abgases im Kamin bestimmt wird. Die Nettoabgasverluste werden jedoch nicht durch die mittlere Temperatur des Kaminabgases, $T_m$, sondern durch $T_o$, seine Endtemperatur bei Verlassen des beheizten Teiles des Gebäudes, also etwa an der oberen Reinigungsklappe, bestimmt.

Durch eine geschickte Wahl der Betriebsparameter Eintrittstemperatur des Kaminabgases, $T_e$, und Fremdluftanteil sowie durch konstruktive Maßnahmen bei der Ausgestaltung des Kamines lassen sich daher die Nettoabgasverluste sehr weit herunterdrücken. Diese Möglichkeiten können jedoch im Normalfall nicht ausgenutzt werden, da die Endtemperatur des Kaminabgases durch die Temperaturbedingung der DIN 4705 (Gl. (2) von /2/) auf einer verlustreichen Höhe festgehalten wird. Durch die weitgehende Trocknung des Abgases im Abgaswandler fällt nun diese Restriktion weg und die Betriebsparameter des Kaminabgases und die Konstruktion des Kamines können sich nun voll an der Zielgröße niedrige Endtemperatur und damit geringste Nettoabgasverluste orientieren.

Die optimale Wahl der Betriebsparameter ergeben sich aus der Gleichung für die mittlere Abgastemperatur im Kamin, $T_m$, (e.g. Gl. 7 der DIN 4705),

$$T_m = T_e - (T_e - T_u)/K * ( 1 - \exp(-K) ) , \qquad (9)$$

mit der Abkühlzahl K

$$K = U * k * L / (m * c_p) \qquad (10)$$

Gl. (9) verknüpft die Eintrittstemperatur $T_e$ mit dem Massenstrom m des Abgases, wobei bei vorgegebener Kesselleistung der Massenstrom m als Maß für den Fremdluftanteil genommen werden kann. In den Gln. (9) und (10) bezeichnen weiterhin (exakte Definitionen siehe DIN 4705):

$T_u$ = Umgebungstemperatur

U = Innerer Schornsteinumfang

L = Länge des Schornsteins

k = Wärmedurchgangskoeffizient des Kamines

$c_p$ = spezifische Wärmekapazität des Abgases .

Das Optimierungsproblem besteht also darin, einerseits durch $T_m$ den nötigen Auftrieb (Druckbedingung der DIN 4705) zu erhalten und andererseits die für den Nettoabgasverlust maßgebende Abgastemperatur $T_o$ (vgl. Gl.(8) von /2/ )

$$T_o = T_e - (T_e - T_u) * exp(-K1) \qquad (11)$$

möglichst klein zu halten. Die Abkühlzahl K1 bezieht sich hierbei auf die Länge L1 des Schornsteins bis zum Ende des beheizten Bereiches.

Setzt man eine volle Ausnutzung der Kaminwärme (vgl. /1/) voraus, so wird man den Fremdluftanteil auf das für die gewünschte Taupunkttemperatur des Kaminabgases notwendige Maß beschränken und seine Eintrittstemperatur gerade so hoch wählen, daß der notwendige Auftrieb zustande kommt.

Der ideale Kamin, der in Verbindung mit dem Abgaswandler sehr niedrige Nettoabgasverluste erlaubt, ist durch folgende Konstruktionsmerkmale gekennzeichnet:

- im unteren Bereich eine kleine Abkühlzahl K ( nach Gl (10) also gute Wärmeisolierung mit kleinem k und kleinem U), dadurch sinkt die Abgastemperatur am Anfang wenig und produziert somit Auftrieb.
- im oberen Bereich des zu beheizenden Gebäudes eine möglichst gute Wärmeableitung, also eine große Abkühlzahl K (großes U und keine Isolierung sondern eher eine Erhöhung des Wärmeüberganges auf die Schornsteinwangen, soweit dies nicht zuviel Druck verbraucht).

Ein im Sinne geringer Nettoabgasverluste guter Kamin ließe sich also beispielsweise durch die Einführung eines (möglichst noch isolierten) Kunststoffrohres in den unteren Teil eines herkömmlichen Schornsteins realisieren.

Neben diesen „passiven" baulichen Maßnahmen kann das Kamingas im oberen Bereich natürlich auch aktiv gekühlt werden. Als wärmeaufnehmende Medien kommen hierbei in Betracht:

- Umluft aus dem beheizten Haus (vgl. /9/ )
- Frischluft zur Belüftung des Hauses (vgl. /9/ )
- Frischluft als Verbrennungsluft
- Heizungswasser einer lokalen Niedertemperaturheizung (z.B. eine auf nur einen Raum beschränkte Fußbodenheizung).

### 3. Anwendung des AGW-Verfahrens

### 3.0 Ein kompakter Abgaswandler

Die im Abschnitt 2 vorgestellten Elemente lassen sich zu einem kompakten Abgaswandler (AGW) miteinander verknüpfen (Bild 15). Der AGW ersetzt sozusagen ein Stück des Verbindungsstückes zwischen Kessel und Kamin. Das Kesselabgas 1 gelangt über das Zuführungsrohr 0 in den AGW, wird dort nach unten umgeleitet und durchfließt den Heißgaskühler 10 (HGK), den Wasserkondensationskühler 20 (WKK) und den Luftkondensationskühler 30 (LKK), wird dann im freien Raum 54 unter dem LKK, wo auch das Kondensat abgeführt wird (in Bild 15 nicht gesondert eingezeichnet), umgelenkt, am unteren (kälteren) Teil des LKK (53, 56) ohne Druckverlust vorbeigeführt (55), um dann in einem Seitenzweig 57 des wärmeren Teiles 51 des LKK wieder aufgewärmt zu werden. Im Bypass 58 wird das Kesselabgas 1 am WKK vorbeigeführt, um dann durch den ("Kesselabgas"-) Seitenzweig des HGK in den Mischraum 62 zu fließen. Dort, bzw. im vorderen Teil des Kaminabgasrohres 61, findet die Vermischung mit der Fremdluft 5 zum Kaminabgas 8 statt.

Die Fremdluft 5 wird, zusammen mit der Umluft 4, durch das Gebläse 60 angesaugt, gelangt in den Verteilungsraum 52 und findet dort ihren Weg zum Fremdluftteil 51 des LKK 30. Dieses Element wird in einer Schleife durchflossen, wobei zumindest ein Teil der Fremdluft noch durch den Seitenzweig 57 fließt und dort das zurückfließende Kesselabgas mit Niedertemperaturwärme wiederaufheizt. Im oberen Teil des Fremdluftteiles 51 des LKK wird die Fremdluft 5 dann von dem direkt aus dem WKK 20 kommenden Kesselabgas 1 auf "niedertemperaturige Endtemperatur" gebracht und strömt anschließend über den Seitenarm 59 am WKK vorbei und durch den "Fremdluft-" Seitenzweig des HGK 10 hindurch in den Raum 63, wo sie die Wärmeverluste des ankommenden Kesselabgasrohres 0 aufnehmen kann. Durch den einstellbaren Injektor 64 strömt sie schließlich mit erhöhter Geschwindigkeit mit Zielrichtung auf das Kaminabgasrohr 61 in den Mischraum 62. Durch die Injektionswirkung wird ein Teil der vom Luftventilator 60 aufgebrachten Energie dazu verwendet, das Kesselabgas 1 durch den AGW zu ziehen.

Die Umluft 4 findet im Verteilungsraum 52 ihren Weg durch den Umluftteil 53 des LKK, an dessen Ausgang sie im Fortluftkanal 56 gesammelt wird und nach außen geführt wird. (Natürlich kann die erwärmte Fortluft von dort auch gezielt zu einem Einsatzort weitergeleitet werden.)

Im Bild 15 nicht eingezeichnet wurde der Heizungsrücklauf, der den WKK 20 kühlt. Der HGK wird entweder durch einem Teilstrom des Heizungsrücklaufes oder des Heizungsvorlaufes gekühlt.

Die Auslegung des AGW kann in groben Stufen erfolgen, wenn aus praktischen Gründen einige **Stellglieder** vorgesehen werden, die die optimierte Anpassung an die vorgegebene Feuerungsanlage (also Brenner, Kessel und Abgasanlage) ermöglichen. Hierzu zählen (in Bild 15 nicht eingezeichnet):

- ein einstellbarer **Bypass** im HGK sowohl für die Fremdluft als auch für das Kesselabgas, so daß die Uebertragung der hochwertigen HT- Wärme auf das Kaminabgas auf das für die Einhaltung der Druckbedingung nötige Ausmaß beschränkt werden kann. Im Grenzfall muß der gesamte Kaminabgasstrom an den Rippen des HGK- Wüt vorbeigeführt werden können. Falls der Druck im Kesselabgasstrom knapp ist, wird auf jeden Fall der Kesselabgasstrom am Wüt vorbeigeführt.

- **Einstellventile im Kühlkreis** des HGK, die durch Vorgabe der Strömungsmenge den Temperaturhub des durch den HGK fließenden Teilstromes des Heizungswassers bestimmen. Außerdem müssen die Wasserströme durch die beiden Randbereiche des HGK, denen vom Kesselabgas her Wärme zufließt und gegebenenfalls nach der Außenseite, zum Kaminabgas hin, Wärme abfließt, so einreguliert werden, daß die Temperatur ihrer vom Kesselabgas beaufschlagten Oberfläche oberhalb des Taupunktes liegt.

- ein **Drosselventil** zur Bemessung **des Fremdluftstromes**. Das Drosselventil kann gleichzeitig die Funktion des Fremdluftinjektors 64 (siehe Abschnitt 2.33) erfüllen. Weiterhin sollte auch die Anzahl der Luftkanäle des LKK, die als Fremdluftkanäle benutzt werden, durch wenige Handgriffe veränderbar sein.

Auch die im Abschnitt 2 besprochenen Modifikationen der im Bild 15 verwendeten Bausteine, beispielsweise der gesplittete LKK des Abschnittes 2.32, können in der Zusammenschaltung nach Art des Bildes 15 zur Anwendung gelangen. Je nach der Art des vorgeschalteten Kessels werden für den Abgaswandler alle Elemente oder nur eine Auswahl benötigt. Der AGW kann auf die unterschiedlichsten vorgegebenen Heizungsanlagen hin angepaßt werden. Einige Besonderheiten sind im folgenden aufgeführt.

### 3.1 Nachschaltung des AGW hinter Standardkessel

Der Abgaswandler (AGW) läßt sich, - bei entsprechender Anpassung und Auslegung -, in jede bestehende Feuerungsanlage mit Standardheizkessel oder Tieftemperaturkessel nachträglich einschalten.

Bestehende Heizkessel sind oft unter dem Druck des von der 1.BImSchV vorgeschriebenen niedrigen Bruttoabgasverlustes und der technischen Anforderung, die Temperaturbedingung des Kamines (nach DIN 4705) einzuhalten, auf hohe Verbrennungsleistung und zusätzliche Fremdluft eingestellt. Diese Probleme werden vom AGW mit hohen Sicherheitsreserven auf andere Weise gelöst, so daß sich die Einstellung des Kessels voll auf die tatsächliche Energieeinsparung und insbesondere auf eine Minimierung des Nettoabgasverlustes konzentrieren kann.

Der Heizkessel sollte auf einen möglichst hohen CO2-Gehalt eingestellt werden, die Kesselleistung kann auf den optimalen Wert zurückgenommen werden. Dadurch werden bei gleicher gelieferter Wärmemenge etwas längere Betriebszeiten und ein etwas höherer Taupunkt des Abgases erzeugt, was sich positiv auf die Rückgewinnung der hochwertigen Wärme für den Warmwasser- Heizkreis auswirkt. Eine zusätzliche Abgasklappe, die zur Erfüllung der unsinnigen (vgl. /1/) Anforderungen der 1. BlmschV in vielen Anlagen installiert werden mußte, sollte aus Gründen der Energieersparnis geschlossen werden.

### 3.11 AGW hinter Gaskessel

Das Einfügen eines AGW hinter einen Gaskessel mit Gebläsebrenner sollte keine besonderen Probleme stellen. Das Gebläse wird im Normalfall noch genügend Reserve besitzen, um die zusätzlichen Strömungswiderstände des AGW, der ja in seinem Abgaszweig auf besonders niedrigen Druckverlust ausgelegt werden kann, zu überwinden.

Die Schaltung eines AGW hinter einen atmosphärischen Gaskessel erfordert einige zusätzliche Ueberlegungen. Die Strömungssicherung wird durch die kontrollierte Zuführung von Fremdluft ersetzt. Der für die Ueberwindung der Strömungswiderstände im Kesselabgaszweig notwendige Unterdruck sollte durch die Injektorwirkung beim Einblasen der Fremdluft (siehe Abschnitt 2.32 ), also letztendlich vom Luftgebläse des LKK, bereitgestellt werden können. Dieser Fremdluftinjektor wirkt ähnlich wie ein im Saugbetrieb arbeitender nachgeschalteter Abgasventilator. - Bei besonders ungünstigen lokalen Bedingungen kann schließlich das Druckproblem auf jeden Fall durch den Einsatz eines Abgasventilators oder eines Dachventilators gelöst werden.

3.12 AGW hinter Öl Gebläsebrenner

Das Abgas von Ölheizungen unterscheidet sich in einigen Punkten, die für die Anwendung des AGW von Bedeutung sind, vom Abgas aus der Verbrennung von Erdgas. Das Erdölabgas :

- enthält weniger Wasserdampf. Bei stöchiometrischer Verbrennung liegt sein Taupunkt etwa bei 45 Celsius.
- enthält Schwefeloxide; dadurch ist es aggressiver und sein Kondensat deutlich saurer als dies beim Erdgasabgas der Fall ist.
- kann kondensierbare Kohlenwasserstoffe und Rußbestandteile enthalten, die zu einer Verschmutzung der Wüt führen.

Hieraus ergeben sich die folgenden Auswirkungen auf den AGW:

(1) Der Heißgaskühler kann und sollte auf eine niedrigere Abkühlungstemperatur des Kesselabgases ausgelegt werden. Der HGK- Vorwärmer, der nur noch eine Temperatur von 45 Celsius im HGK garantieren muß, kann entsprechend einfach ausgelegt werden; die Temperaturspreizung des HGK- Kühlwassers ist wesentlich unkritischer als im Falle des Erdgasabgases. Um der höheren Aggressivität des Öl- Abgases Rechnung zu tragen, wird man die Temperaturspreizung jedoch nicht zu klein wählen, um beim Anfahren der Heizung besonders schnell den unvermeidbaren Kondensationsbereich zu durchlaufen.
(2) Der Wasserkondensationskühler (WKK) hat nur eine sehr geringe Bedeutung. Er kann daher im Normalfall, d.h. bei den Rücklauftemperaturen der üblichen Warmwasserheizung, auch weggelassen werden. Die Kondensationswärme des Abgases wird dann ausschließlich im LKK, der wegen des Einsatzes von Kunststoff besonders korrosionsfest ist, genutzt.
(3) der modulare Aufbau des AGW erleichtert die Zugänglichkeit der Wüt zu Reinigungszwecken. Auf ein leichte Ausbaubarkeit der einzelnen Wüt kann und sollte geachtet werden.
(4) aus Sicherheitsgründen (theoretische Brandgefahr durch Ablagerungen) sollte die automatische Kesselabschaltung bei überhöhter Temperatur hinter dem HGK besonders sicher und redundant ausgelegt werden.

Ölheizungen werden weit überwiegend, - auch bei kleineren Anlagen im Haushaltsbereich -, mit Gebläsebrennern betrieben. Dies vereinfacht die Anwendung des AGW.

3.13 Abgaswandler und 1.BlmschV

Da es sich bei einem Kessel mit AGW um eine Brennwertanlage im Sinne der 1. BlmschV /3/ handelt, unterliegt er nach §15 der 1.BlmSchV nicht mehr der jährlichen Überwachung durch das Schornsteinfegerhandwerk. Dennoch sind die Anforderungen der 1. BlmschV mehr als erfüllt. Nach der Anlage II der 1.BlmSchV wird der „Abgasverlust", also in physikalisch korrekter Bezeichnung der Bruttoabgasverlust an fühlbarer Wärme, hinter dem letzten Wärmetauscher gemessen. Durch den Wegfall der Einschränkungen durch die Temperaturbedingung der DIN 4705 ergeben sich jedoch sehr niedrige Werte des Bruttoabgasverlustes. da die Einhaltung der Druckbedingung der DIN 4705 keine hohen Anforderungen an die Bereitstellung von Kaminwärme stellt. Im Normalfall wird sogar durch die Einstellung des Kessels auf hohen CO2 - Gehalt und eher geringere Kesselleistung bereits der Wärmeinhalt des Kesselabgases direkt beim Austritt aus dem Kessel den Grenzwert des „Abgasverlustes" der 1. BlmSchV einhalten.
Der nachträgliche Einbau eines AGW stellt also ein preiswertes und physikalisch vernünftiges Mittel dar, eine bestehende Feuerungsanlage nachhaltig an die sich andauernd verschärfenden gesetzlichen Anforderungen anzupassen. Ein schlecht isolierter Kessel kann nachträglich wärmegedämmt werden, ein defekter oder „schmutziger" Brenner kann repariert oder ausgetauscht werden. Es besteht also keine Notwendigkeit, zur Verbesserung des Wirkungsgrades und beim Übergang zur Brennwerttechnik gleich die gesamte Feuerungsanlage auszutauschen.

3.14 AGW mit gesplittetem LKK für Heizkessel großer Leistung

Aufgrund der physikalischen Gegebenheiten kann die Aufgabe eines Heizsystems aufgeteilt werden in:

- Ausgleich der Transmissionswärmeverluste
- Erwärmung der Frischluft

Die Erwärmung der Frischluft von der Außenlufttemperatur auf die Raumtemperatur ist hierbei die bei weitem exergetisch und auch technisch anspruchslosere Tätigkeit und daher besonders für den Einsatz der niedertemperaturigen Wärme, die vom Temperaturniveau her ja nicht mehr auf den Rücklauf des Heizungswassers übertragen werden kann, geeignet. Mit dem im Abschnitt 2.32 beschriebenen Instrumentarium:

- LKK mit Split System und (keinem) gesondertem Niedertemperatur-Heizkreis
- Konvektionsheizgerät zur Raumheizung und möglichst zur Frischlufterwärmung kann eine sehr weitgehende Ausnutzung der Brennstoffwärme erreicht werden.

Die Niedertemperaturwärme stellt nur einen Anteil von etwa 5% an der gesamten Brennstoffwärme dar. Unter Beachtung der Priorität kann sie verwendet werden zur Erwärmung von:

- Frischluft
- Einzelräumen mit einer geeigneten Niedertemperatur Heizvorrichtung wie Fußbodenheizung oder Konvektionsheizgerät (z.B. NT-KHG nach Bild 14)
- Haushalts-Warmwasser ( als Vorerwärmung)
- untergeordneten Räumen ohne volle Temperaturanforderung (z.B. Treppenhaus und Flure, Hobby-und Arbeitsräume)
- Kellerräumen ohne besondere Temperaturanforderung (zur Verminderung von Wärmever lusten aus beheizten Räumen)
- normalen Räumen im zeitversetzten niedertemperaturigen Heizbetrieb (siehe Abschnitt 2.2.2.3 von /4/)

Bei großen Heizkesseln dürfte es sich auf jeden Fall rentieren, durch einen Splitbetrieb des LKK eine oder mehrere der oben dargestellten hochwertigeren Einsatzmöglichkeiten der NT-Wärme wahrzunehmen.

### 3.2 Brennwertkessel mit AGW

3.21 Neuanlage

Bei Neuanlagen bringt die Integration des AGW in den Kessel kundenorientierte Vorteile:

- einfaches Marketing
- geringere Stellfläche und kompaktes Aussehen
- einfache und gegenüber herkömmlichen Brennwertkesseln unveränderte Montage
- bei hoher Stückzahl dürfte sich auch ein günstigerer Gesamtpreis ergeben.

Eine neue, dem Wissensstand des AGW-Verfahrens entsprechend optimierte Feuerungsanlage besteht aus einem schadstoffarmen Brenner, einem Kessel mit integriertem Abgaswandler ( also einem herkömmlichen Brennwertkessel mit zusätzlich eingebautem Luftkondensationskühler (LKK)) und einer druckdichten Abgasanlage. Bei einem Gebläsebrenner kann das Gebläse so stark ausgelegt werden, daß der Druck für den gesamten Kesselwiderstand (einschließlich AGW ) und die Fortleitung des Kaminabgases durch die Abgasleitung ausreicht. Analoges gilt beim Einsatz eines Abgasventilators.
Der Wärmeübertrag auf das Kaminabgas sollte sich auf den LKK beschränken. Die Abgasleitung sollte ohne jede besondere Wärmedämmung im Innern des Gebäudes verlegt werden, so daß der Wärmeinhalt des Kaminabgases vom Gebäude weitgehend als Kaminwärme ausgenutzt werden kann. Die Beimischung von Fremdluft sollte knapp eingestellt werden und sich auf das für die Absenkung des Taupunktes unter Raumtemperatur erforderliche Maß beschränken.
Bei einem auf Dauer feuchte- und korrosionsfesten Abgasrohr kann dann auf die Fremdluft ganz verzichtet werden, wenn sich eine vollständige Ausnutzung der Niedertemperaturwärme des LKK anderweitig ergibt; ansonsten sollte die Nutzung der Niedertemperaturwärme durch die Kaminwärme bedacht werden.
Beim Ersatz des Kessels mit Brenner in einer bestehenden Feuerungsanlage sollte ein Kessel mit integriertem AGW angeschafft werden. Ein noch funktionsfähiger Schornstein kann weiter benutzt werden.
Wird der Kessel mit AGW innerhalb der Wohnung eingesetzt, - z.B. als „Kompaktheizzentrale" odgl. -, so ergibt sich automatisch eine vollständige Nutzung der Niedertemperaturwärme. Bei Außenwandmontage ist eine direkte Frischluftkühlung des LKK naheliegend. Eine „AGW-Kompaktheizzentrale" innerhalb eines zu beheizenden Gebäudeteiles kann den Brennwert des Brennstoffes praktisch verlustfrei nutzen. Dies ist besonders attraktiv bei der Nutzung der Kondensationswärme einer ölbeheizten Anlage, bei der sich der Einsatz eines WKK kaum lohnt und daher die gesamte Kondensationswärme im LKK abgeführt wird (siehe Abschnitt 3.12). - Auf entsprechenden Schallschutz muß jedoch geachtet werden

3.22 Nachschaltung hinter bestehenden Brennwertkessel

Auch bei einer Feuerungsanlage, die bereits mit einem herkömmlichen Brennwertkessel ausgerüstet ist, kann sich die Nachschaltung eines AGW- Wandlers, der sich in diesem Anwendungsfall im wesentlichen auf einen Luftkondensationskühler (LKK) reduziert, noch lohnen. Dies gilt insbesondere dann, wenn

- der in herkömmlichen Brennwertkesseln meist eingebaute Abgasventilator stark genug ist, um den zusätzlichen Strömungswiderstand des LKK zu überwinden
- die Heizungsanlage nicht schon auf sehr niedrige Rücklauftemperaturen, wie sie beispielsweise bei Fußbodenheizungen auftreten, ausgelegt ist.

### 3.3 Nachschaltung hinter Brennstoffzelle

Die Entwicklung von Brennstoffzellen für mobilen, aber auch für stationären Betrieb hat in letzter Zeit große Fortschritte gemacht. Für eine stationäre Brennstoffzelle, die im „**Strom- und Wärmebetrieb**" im Haushalts-oder Gewerbebereich eingesetzt wird, lassen sich ungewöhnlich hohe elektrische und Gesamt- Nutzungsgrade erwarten. (Der Begriff „Kraft- Wärmekopplung" anstelle von „Strom- und Wärmebetrieb" ist bei Brennstoffzellen nicht angebracht, da die Stromerzeugung ohne mechanische „Kraft" erfolgt und Strom auch zu anderen Zwecken als Krafterzeugung genutzt werden kann). Im Gegensatz zu einem zentralen „Strom- und Wärmebetrieb" läßt sich bei dezentralem Einsatz der Brennstoffzelle auf Gebäudeebene auch die Niedertemperaturwärme und insbesondere die Kondensationswärme des Abgases weitgehend nutzen. Die gängigen Brennstoffzellen benutzen Erdgas, Methanol oder sogar direkt Wasserstoff, so daß diese Kondensationswärme nicht unerheblich ist.

Das Abgas einer mit Erdgas betriebenen Brennstoffzelle unterscheidet sich nicht grundsätzlich von dem eines mit Erdgas betriebenen Brenners. Wegen der im Vergleich zum Brenner wesentlich niedrigeren Prozeßtemperaturen (dies gilt auch für die „Hochtemperatur-Brennstoffzelle") und den sonstigen Eigenschaften der Brennstoffzelle können keine Stickoxide entstehen, so daß das Abgas sehr wenig korrosiv sein müßte. Aus Verfahrensgründen der Brennstoffzellentechnik muß bei Brennstoffzellen auf Erdgasbasis jedoch mit einer stark erhöhten Luftzahl lambda, z.B. lambda = 3 oder mehr, gearbeitet werden. Für die Anwendung des AGW kann daher das Abgas einer Brennstoffzelle mit dem eines sehr sauberen Brenners, der mit einem Luftüberschuß von lambda = 3 und mehr, was einem Taupunkt von ca. 40° Celsius und weniger entspricht, gleichgesetzt werden. Bezüglich des Taupunktes entspricht dies etwa den Verhältnissen bei der Ölheizung, so daß sich die im Abschnitt 3.12 diesbezüglich angestellten Ueberlegungen übertragen lassen. Die geringe Korrosionswirkung des Brennstoffzellen-Abgases wirkt sich zusätzlich positiv aus.

Es spricht nichts dagegen, die Wärme und „Abwärme" von Brennstoffzellen in derselben Weise zu nutzen, wie dies bei einem Brenner mit dem um seine Flamme herumgebauten Kessel und zusätzlicher nachgeschalteter Abgasnutzung Stand der Technik ist. Dann läßt sich bei stationären Brennstoffzellen ein Gesamtwirkungsgrad erzielen, wie man ihn als lediglich thermischen Wirkungsgrad bisher nur bei Kesseln mit weitgehender Brennwertnutzung kennt. Der dezentrale Einsatz von Brennstoffzellen mit einer weitestgehenden Wärmenutzung im Hochtemperaturbereich für die Warmwasserheizung und im Niedertemperaturbereich als erste Stufe für die Bereitung von Warmwasser und durch den AGW für die Frischluft- und Umgebungslufterwärmung verspricht die energetisch sinnvollste Anwendung des Einsatzes von Erdgas zu Energiezwecken zu werden.

### Schrifttum:

/1/ LUTHER, Gerhard : "Ein folgenschwerer Denkfehler in der Kleinfeuerungsanlagenverordnung", GesundheitsIngenieur 117 (1996), S. 113-126
/2 DIN 4705-Teil 1: „Feuerungstechnische Berechnungen von Schornsteinabmessungen "; verfügbar u.a. im DIN Taschenbuch 146, Beuth-Verlag; Berlin; (1993)
/3/ Erste Verordnung zur Durchführung des Bundes-Immissionsschutzgesetzes (Verordnung über Kleinfeuerungsanlagen -1. BImSchV), Bundesgesetzblatt (1997), Teil I Nr. 17, S. 491 ff., ausgegeben am 20.3.1997
/4/ LUTHER, Gerhard : "Abgaswandler", am 10.4.97 beim Deutschen Patentamt, München, unter AZ 197 14 760.7 zum Patent angemeldet
/5/ ELSNER, Norbert: Grundlagen der Technischen Thermodynamik;Akademie Verlag, Berlin 1993, S.45 ff ("Wärmedurchgang durch berippte Wände")
/6/ VDI- Wärmeatlas: Berechnungsblätter für den Wärmeübergang , 7. Auflage , VDI- Verlag, Düsseldorf (1994) hier: Kapitel Gd "Wärmeübergang im konzentrischen Ringspalt".
/7/ VDI- Wärmeatlas, siehe /6/, hier: Kapitel Lb "Druckverlust bei der Strömung durch Rohre"

/8/ RECKNAGEL-SPRENGER : Taschenbuch für Heizung und und Klimatechnik, Oldenbourg Verlag München, 59. Auflage 1977, Seite 526 (Abschnitt 232-8 )

/9/ LUTHER, Gerhard : "Nutzungsseitige Wärmerückgewinnung aus Abgas ", am 21.7.94 beim deutschen Patentamt München zum Patent angemeldet unter P4425741.4

/10/ MRZIGLOD-HUND, Monika: „Ein neues Berechnungsverfahren für den Wärmeverlust erdreichberührender Bauteile", GesundheitsIngenieur 116 (1995), S.65-73 und 139-145

**Bildunterschriften**

**Bild 1:** Vereinfachtes **Blockschaltbild einer Feuerungsanlage mit Abgaswandler**. Das ursprüngliche Kesselabgas 1 wird zunächst im Heißgaskühler (**HGK**) ohne Unterschreitung des Taupunktes abgekühlt und im WasserKondensationsKühler (**WKK**) wird vor allem die Kondesationswärme so weit wie möglich auf den Heizungsrücklauf übertragen. Im anschließenden LuftKondensationskühler (**LKK**) erfolgt durch Wärmübertragung auf Umgebungsluft (4, 5) eine noch weitergehende Abkühlung und Entfeuchtung. Anschließend wird durch Zumischung von Fremdluft 5 und maßvoller Wiederaufheizung im Gegenstrom ein energiearmes Kaminabgas 8 erzeugt, das die Temperatur- und die Druckbedingung der DIN 4705 sicher einhält.

**Bild 2:** Abgaswandler (AGW) gemäß Bild 1, jedoch mit minimalem Druckabfall im Abgasweg. Daher erfolgt die Vereinigung von Kesselabgas 1 und Fremdluft 5 zum Kaminabgas 8 erst nach dem Durchlauf der Wärmetauscher.

**Bild 3:** Zum Vergleich: Herkömmlicher Brennwertkessel in der Darstellungsweise der Bilder 1 und 2.

**Bild 4**: Laminarer Rippen- Wüt (auseinandergezogen gezeichnet) mit kleinem Abstand zwischen den Rippen. Durch die zentrale Bohrung 12 der Rippen 11 und Abstandshalter 13 verläuft das Kühlrohr (hier nicht eingezeichnet). Die Verlötung erfogt von der gemeinsamen Kante her.

**Bild 5**: Elementarzelle eines laminaren Rippen- WüT für lötempfindliche Rippen. Die Rippen 11 sind durch Schrauben 15 mit der mit dem Kühlrohr 12 verlöteten Halterung 13-14 verbunden.

**Bild 6**: Haltekörper für lötempfindliche Rippen (auseinandergezogen gezeichnet), bestehend aus Kühlrohr 12 und einheitlichen Abstandshaltern 13. Rippenabstand und Rippendicke sind gleich. Die Rippen werden senkrecht zum Kühlrohr in einer oberen und einer unteren Reihe zwischen die Abstandshalter 13 eingelegt und über die durchgehenden Bohrungen 15 festgeschraubt.

**Bild 7**: Elementarzelle eines laminaren Rippen Wüt für lötempfindliche Rippen. Die Längsrichtung des Haltekörpers liegt senkrecht zur Anströmrichtung. (Bezeichnung wie in Bild 5).

**Bild 8**: Vergrößerung der parallelen Anströmfläche durch Staffelung der berippten WüT (23, 25) in mehreren (hier drei) Ebenen. Die Gasströme sind der Anzahl der Pfeile proportional, wobei die gestrichelten Pfeile das abgekühlte Gas kennzeichnen. Der Druckabfall in den Bypässen (26, 27 und 24) kann vernachlässigt werden.

**Bild 8a**: Ein Rippenrohr-Element 80 für einen gestaffelten Rippen-Wüt. Das Kühlrohr 12 ist zwischen den berippten Abschnitten 25 und den unberippten Abschnitten 26 mit Wandverdickungen 81 zur Vergrößerung des axialen Wärmeflusses versehen.

**Bild 8b**: Ein aus zwei Rippenrohr-Element 80 bestehender einfacher gestaffelter Rippen-Wüt, der für einen erhöhten Wärmeübertrag vom Rohr auf das Kühlmittel ausgelegt ist.

**Bild 8c**: Ein gestaffelter Rippen-Wüt mit n= 2 Hauptebenen aus je vier Unterebenen. Die Leitflächen (22, 83) bewirken, daß jedes Rippenpaket 25 nur genau einmal vom Gas durchströmt wird. Im linken Grundelement sind die Gasströme durch die Anzahl der Pfeile veranschaulicht, wobei das abgekühlte Gas durch Strichelung des Pfeiles gekennzeichnet wird. In jedem Rippenrohr-Element 80 sind die nicht berippten Abschnitte 26, die sich zusätzlich für die Wärmeübertragung vom Rohr auf die Kühlflüssigkeit nutzen lasen, vier mal so groß wie die berippten Abschnitte 25. Die Anströmfläche ist insgesamt um den Faktor f = 1,6 vergrößert.

**Bild 8d** : **Axialer Rippen-Wüt** (Draufsicht). Die Rippen 11 erstrecken sich parallel zum Kühlrohr 12. Die Abstandshalter 13 verbinden die Rippen miteinander. Ueber den hierdurch gebildeten „Rippenfuß" 92 werden die Wärmeströme auf rechteckige Aufnahmeköpfe 91 geleitet, die über eine zentrale Bohrung auf das Kühlrohr 12 gelötet sind.

**Bild 9**: Koaxialer Wüt aus Standard Kupferrohren (31,33) und Fittings (32,34) als HGK- Vorwärmer.

**Bild 10**: Koaxial vorgewärmtes Kühlrohr als interner HGK- Vorwärmer im HGK

**Bild 11**: Gestaffelte Anströmung in einem WKK : Die Rippen sind in zwei Ebenen angeordnet, so daß einerseits Platz für die Verschraubungen an der Halterung geschaffen wird und andererseits die parallele Anströmfläche vergrößert wird. (Bezeichnungen wie in Bild 8).

**Bild 12**: Ein spezialisierter Kreuzstrom - WüT als Luftkondensationskühler (LKK). Die Kühlluft wird als Umluft 4, ihr wärmerer Teil als Fremdluft 5 genutzt. Auch der Kesselabgasstrom 1 wird nach maximaler Entfeuchtung wieder im Seitenarm 57 aufgeheizt.

**Bild 13**: Ein kombinierter Luftkondensationskühler (LKK). Die Fremdluft 5 wird durch einen doppelseitiigen Rippen-Wüt 65 und einen Kreuzstrom-Wüt 51 als Abgas- Fremdluft Wärmetauscher maximal aufgeheizt. Die Restwärme des Kesselabgases 1 wird durch einen korrosionsgeschützten Wasserkondensationskühler 66 auf einen gesonderten Niedertemperaturheizkreis (hier nicht dargestellt) übertragen. Der Kesselabgasstrom 1 wird nach maximaler Entfeuchtung wieder im Seitenarm 55 durch den Rippen-Wüt 65 rückgewärmt.

**Bild 14:** Niedertemperatur Konvektionsheizgerät (NT-KHG) für Umluft und Frischluft als Wärmesenke für den gesplitteten LKK. Das Gebläse 70 saugt Umluft 4 und im Rippen-Wüt 71 vorgewärmte Frischluft 74 an und drückt sie als Zuluft durch mehrere haubenartig angeordnete Rippen-Wüt 72 in den zu beheizenden Raum. Das Heizwasser fließt durch die in Serie geschalteten Kühlrohre 12, wobei der Rippen-Wüt 71 zuletzt durchflossen wird.

**Bild 15:** Zusammenschaltung von Heißgaskühler (HGK), Wasserkondensationskühler (WKK) und Luftkondensationskühler (LKK) zum Abgaswandler (AGW)

## Patentansprüche

1. Verfahren zur Ableitung von und Wärmegewinnung aus dem Abgas von Heizungsanlagen (einschließlich Motorwärmepumpen, Kraftheizungen, stationären Brennstoffzellen) gekennzeichnet dadurch, daß aus heißem und feuchtem Kesselabgas unter Wärmerückgewinn **lauwarmes und trockenes Kaminabgas** produziert wird

   und zwar dadurch, daß das ursprüngliche Verbrennungsabgas ("**Kessel**Abgas") nach der möglichst weitgehenden Abgabe seines Wärmeinhaltes an das Heizungswasser

   durch direkten oder indirekten Wärmetausch mit Umluft und/oder Frischluft in einem Luftkondensationskühler (LKK) noch weiter heruntergekühlt und dadurch entfeuchtet wird und anschließend mit einem Teil dieser vorgewärmten Luft als Fremdluft zum "**Kamin**abgas" vermischt wird,

   > wobei dieses Kaminabgas einerseits durch die Verdünnung mit Fremdluft so eingestellt wird,
   > daß sein Wasserdampftaupunkt unterhalb der Raumtemperatur oder doch so niedrig liegt,
   > daß eine Wasserkondensation im Innern des Kamines ausgeschlossen werden kann,
   > und andererseits, gegebenenfalls durch weitergehende Erwärmung im Gegenstrom mit dem ankommenden Kesselabgas oder einem sonstigen Wärmeträger, im Schornstein genügend Auftrieb produziert, um die Druckbedingung der DIN 4705 zu erfüllen.

2. Abgaswandlerverfahren nach 1 dadurch gekennzeichnet, daß im Luftkondensationskühler (LKK) auch das Kesselabgas nach seiner weitestgehenden Entfeuchtung und Abkühlung durch direkten oder indirekten Wärmetausch zum ankommenden Kesselabgas wieder rückgewärmt wird.

3. Abgaswandlerverfahren nach 1 bis 2 dadurch gekennzeichnet, daß im Luftkondensationskühler (LKK) die niedertemperaturige Wärme, die nicht zur Erwärmung der Fremdluft oder zur Rückwärmung des Kesselabgases benutzt wird, zunächst auf einen separaten niedertemperaturigen Wasserkreislauf übertragen wird, und das so erwärmte Wasser an anderer Stelle seine Wärme an die Raumluft und/oder an Frischluft abgibt.

4. Abgaswandlerverfahren nach 1 bis 3 dadurch gekennzeichnet, daß die Vermischung von Fremdluft und Kesselabgas zum Kaminabgas erst im Kamin erfolgt, wobei die Fremdluft in einer druckfesten dichten „Abgasleitung" auch noch eine geeignete Strecke innerhalb des aktiven Kamines oder in einem „stillgelegten" Zug des Schornsteines gesondert geführt werden kann.

5. Abgaswandlerverfahren nach 1 bis 4 dadurch gekennzeichnet, daß der Unterdruck im Abgasweg nicht vollständig thermisch sondern mechanisch durch einen Dachventilator oder zumindest teilweise mechanisch durch die Injektion der Fremdluft am Ausgang des Abgaswandlers oder an geeigneter Stelle im Kamin erzeugt wird, und daher insbesondere der Wärmeübertrag von hochwertiger, d.h. vom Heizungswasser noch aufnehmbarer Wärme verringert werden oder sogar unterbleiben kann.

6. Gerät zur Realisierung des Abgaswandlerverfahrens 1-5, im folgenden **Abgaswandler (AGW)** genannt, dadurch gekennzeichnet, daß aus Gründen der Werkstoffwahl nach den Gesichtspunkten der Kombination von Temperatur- und Korrosionsfestigkeit der gesamte Prozeß in konstruktiv getrennten Stufen durchgeführt wird, wobei das Kesselabgas

   - zunächst in einem kombinierten Abgas-Wasser und Abgas-Luft Wüt (Wüt = Wärmeübertrager), der im folgenden **Heißgaskühler (HGK)** genannt wird, von gegebenenfalls in seiner Temperatur angehobenem Heizungswasser und zusätzlich vom Kaminabgas oder seinen noch unvermischten Komponenten konstruktiv so abgekühlt wird, daß der gesamte HGK oberhalb der Taupunkttemperatur des im Abgas vorhandenen Wasserdampfes bleibt, und daher temperaturfeste aber nicht besonders korrosionsfeste Werkstoffe wie normales Stahlblech und Kupfer oder Aluminium benutzt werden können, und

- dann in einem Abgas-Wasser Wüt, im folgenden **WasserKondensationsKühler (WKK)** genannt, soweit in den Kondensationsbereich des Abgases hinein abgekühlt wird, wie es der Wärmeübertrag auf das Heizungsrücklaufwasser gestattet, und

- dann im **Luftkondensationskühler (LKK)** nach Anspruch 1-3 noch weiter heruntergekühlt und entfeuchtet sowie anschließend rückgewärmt wird, wobei ein Teil der zur Kühlung benutzten Umgebungsluft optimal aufgewärmt wird und als Fremdluft dem Kesselabgas zugemischt werden kann, wodurch das Kaminabgas entsteht.

7. Verfahren zur Realisierung des Abgaswandlerverfahrens 1- 5 als Ergänzung eines herkömmlichen Brennwertkessels (der bereits die Funktionen des Heißgaskühlers (HGK) und des Wasserkondensationskühlers (WKK) erfüllt), das den Verfahrensschritt eines Luftkondensationskühler (LKK) nach Anspruch 1- 3 und 6 in den Brennwertkessel integriert oder ihm als getrennte Einheit nachschaltet.

8. Abgaswandler nach Anspruch 1-7, der zur Ergänzung eines Ölkessels dient, oder der insbesondere für einen Einsatzort im zu beheizenden Bereich ausgerichtet ist (z.B. bei einer "Etagenheizung"), wo die durch den LKK erwärmte Umluft unmittelbar als Nutzwärme wirkt, dadurch gekennzeichnet, daß die gesamte Kondensation des Wasserdampfes im Luftkondensationskühler (LKK) stattfindet (und der WKK daher entbehrlich ist).

9. Kühlrohr zur Ableitung der Wärme eines Rippenwärmetauschers, z.B. für den Einsatz als **interner Vorwärmer** des Kühlwassers im Heißgaskühler (HGK) nach Anspruch 6, dadurch gekennzeichnet, daß zur Erhöhung des inneren Wärmeüberganges und/oder zur Einhaltung einer Mindesttemperatur an der dem Gas zugewandten Oberfläche das Kühlrohr als am Ende außen kurzgeschlossenes koaxiales Doppelrohr ausgebildet ist, wobei das Kühlmittel zunächst durch das am Ende offene innere Rohr fließt, dann durch die Kurzschlußkappe des äußeren Rohres umgelenkt wird und im Zwischenraum zwischen innerem und äußerem Rohr gegensinnig zurückfließt.

10. **Rippenwärmetauscher**, z.B. zum Einsatz im Abgaswandler nach Anspruch 6, dadurch gekennzeichnet, daß zur Realisierung einer laminaren Strömung in engen Kanälen zwischen den Rippen, die (gelochten) Rippen alternierend mit (gelochten) Abstandshaltern auf das Kühlrohr (oder Heizrohr) gesteckt werden und von der gemeinsamen Kante von Rippen und Abstandshalter her die Rippen, die Abstandshalter und das Kühlrohr miteinander verlötet (oder verschweißt oder verklebt ) werden.

11. Rippenwärmetauscher nach Anspruch 10, dadurch gekennzeichnet, daß an Stelle von gesonderten Rippen und Abstandshaltern nur einseitige Rippen verwendet werden, die paarweise gegeneinander um beispeilsweise 180 Grad gedreht sind und alternierend auf das Kühlrohr gesteckt werden.

12. Kühlrohr mit Haltekörper zur Aufnahme von Rippen, im folgenden **Haltekörper** genannt, dadurch gekennzeichnet, daß (gelochte) kurze und lange Abstandshalter alternierend auf das Kühlrohr gesteckt werden und von ihrer gemeinsamen Kante her die Abstandshalter und das Kühlrohr miteinander verlötet (oder verschweißt ) werden, wobei die Dicke des kurzen Abstandshalter so gewählt wird, daß der Spalt zwischen den ihn umgebenden beiden langen Abstandshaltern eine Rippe fassen kann, deren Längsrichtung senkrecht zur Achse des Kühlrohrs verläuft.

13. Haltekörper im Sinne von Anspruch 12 dadurch gekennzeichnet, daß gleichartige Abstandshalter mit einem dezentral angebrachten Loch derart auf das Kühlrohr gesteckt werden, daß ein vorgegebenes Ende der Abstandshalter jeweils abwechselnd nach oben und nach unten weist, so daß zwischen übernächsten Abstandshaltern sich jeweils ein Spalt ergibt, der eine Kühlrippe aufnimmt.

14. Rippenwärmetauscher mit Haltekörper, dadurch gekennzeichnet, daß er aus einem Haltekörper nach den Ansprüchen 12-13 und Rippen besteht, die blockweise mit dem Haltekörper verschraubt und/oder verklebt werden, so daß die Rippen ohne thermische Belastung mit dem Haltekörper verbunden werden.

15. Rippenwärmetauscher mit Haltekörper nach Anspruch 12-14 dadurch gekennzeichnet, daß metallische Rippen zum Korrosionsschutz mit Kunststoffolie beklebt werden.

16. Rippenwärmetauscher mit vergrößerter paralleler Anströmfläche, **gestaffelter Rippenwärmetauscher** genannt, dadurch gekennzeichnet, daß er in mehrere Ebenen gestaffelt ist und zwar derart, daß der ankommende Gasstrom in zwei oder mehrere Teilströme aufgeteilt wird, von denen jeder durch mehrere Ebenen geleitet wird, wobei in genau einer Ebene sich ein berippter Kühlkörper befindet, während in den sonstigen Ebenen der Teilstrom durch Bypässe an den berippten Kühlkörpern für die anderen Teilströme vorbei geleitet wird.

17. Gestaffelter Rippenwärmetauscher nach Anspruch 16, wobei die unberippten Bereiche des Kühlrohres für die Ausnutzung des Wärmeüberganges vom Rohr auf das Kühlmittel ausgelegt sind, dadurch gekennzeichnet, daß die Länge eines unberippten Abschnittes des Kühlrohres der axialen Eindringtiefe des Wärmestromes aus den benachbarten berippten Teilen entspricht, wobei diese nutzbare Länge durch Verdickung der thermisch gut leitfähigen Rohrwand beispielsweise durch Anbringen von Abstandshaltern nach Anspruch 10 oder 12 vergrößert werden kann.

18. Rippenwärmetauscher mit kleinen Zwischenrippen-Abständen, dadurch gekennzeichnet, daß die Rippen parallel zum Kühlrohr verlaufen und in kurzen Abständen durch metallische Abstandshalter untereinander thermisch leitend verbunden sind und an diesen „Rippenfüßen" seitlich über durchbohrte Metallstäbe als Aufnahmeköpfe mit dem Kühlrohr verbunden sind. Diese Vorrichtung wird **axialer Rippenwärmetauscher** genannt.

19. **Konvektionsheizgerät** als kompakter Gas-Wasser Wüt zur Ausnutzung von Niedertemperaturwärme zur Frischlufterwärmung und Raumheizung dadurch gekennzeichnet, daß ein Gebläse
Frischluft durch einen Rippenwärmetauscher, beispielsweise nach Anspruch 10, 11, 16 und 17, und Umgebungsluft durch eine Klappe ansaugt
und als Zuluft über Rippenwärmetauscher beispielsweise nach Anspruch 10, 11, 16 und 17, insbesondere über eine Haube (also ein Gebilde aus Seitenwänden und Deckel) aus derartigen Rippenwärmetauschern, ausbläst.

20. **Schornstein** zur Minimalisierung der Nettoabgasverluste im Zusammenhang einer Feuerungsanlage mit Abgaswandler nach Anspruch 1-8 dadurch gekennzeichnet, daß ein gegebenenfalls thermisch isoliertes Abgasrohr nur in den unteren Teil eines herkömmlichen Kamins gesteckt wird.

Kessel
0
1

KesselAbgas

HGK
10

WKK
20

Fremdluft
5

Umluft
4

LKK
30

1

8

8

KaminAbgas

Kamin
9

4

**Bild 1:**

Kessel
0
1

KesselAbgas

HGK
10

WKK
20

Fremdluft
5

Umluft
4

LKK
30

KaminAbgas

5

1

8

Kamin
9

4

Umluft

**Bild 2:**

Kessel
0

1

HGK
10

WKK
20

KesselAbgas

1

Kamin
9

**Bild 3:**

13

11

12

**Bild 4:**

Kesselabgas

**Bild 5:**

**Bild 6:**

Kesselabgas

14

13

11    15    12    15    11

**Bild 7:**

21    heißes Gas    21

1

23    24    1. Ebene

27

22    2. Ebene

26    25

3. Ebene

1

kaltes Gas

**Bild 8 :**

80

12    81    12

26    25

**Bild 8a:**

26

25    80

25

**Bild 8b:**

1    heißes Gas

21    21

12    25    26    12

86

82

22

83

kaltes Gas

**Bild 8c**

**Bild 8d :**

**Bild 9**:

EP 0 870 996 A2

**Bild 10:**

31

**Bild 11:**

**Bild 12:**

**Bild 13:**

**Bild 14:**

**Bild 15**: